(19) Europäisches Patentamt
European Patent Office
Office européen des brevets

(11) EP 1 110 381 B1

(12) EUROPEAN PATENT SPECIFICATION

(45) Date of publication and mention of the grant of the patent:
**16.07.2003 Bulletin 2003/29**

(21) Application number: **99945326.9**

(22) Date of filing: **27.08.1999**

(51) Int Cl.[7]: **H04N 5/225**, H04N 5/228, H04N 5/217, H04N 5/208, G06K 9/36, H04N 5/235, H04N 5/232, G06T 5/50, G06T 5/10

(86) International application number:
**PCT/US99/19863**

(87) International publication number:
**WO 00/013407 (09.03.2000 Gazette 2000/10)**

(54) **METHOD AND APPARATUS FOR ELECTRONICALLY ENHANCING IMAGES**

GERÄT UND VERFAHREN ZUR ELEKTRONISCHEN BILDVERBESSERUNG

PROCEDE ET DISPOSITIF PERMETTANT D'AMELIORER DES IMAGES ELECTRONIQUEMENT

(84) Designated Contracting States:
**DE FR GB NL**

(30) Priority: **28.08.1998 US 98342 P**

(43) Date of publication of application:
**27.06.2001 Bulletin 2001/26**

(73) Proprietor: **Sarnoff Corporation**
**Princeton, NJ 08543-5300 (US)**

(72) Inventors:
- **BOGONI, Luca**
  **Philadelphia, PA 19103 (US)**
- **HANSEN, Michael, Wade**
  **Bucks County, Newtown, PA 18940 (US)**
- **BURT, Peter**
  **Princeton, NJ 08540 (US)**
- **HANNA, Keith, James**
  **Princeton, NJ 08540 (US)**

(74) Representative: **Pratt, Richard Wilson et al**
**D. Young & Co,**
**21 New Fetter Lane**
**London EC4A 1DA (GB)**

(56) References cited:
**US-A- 4 661 986**
**US-A- 5 038 206**
**US-A- 5 276 519**
**US-A- 5 325 449**
**US-A- 5 335 069**
**US-A- 5 359 674**
**US-A- 5 412 424**
**US-A- 5 517 239**
**US-A- 5 706 054**
**US-A- 5 719 966**
**US-A- 5 734 441**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 110 381 B1

## Description

### BACKGROUND OF THE INVENTION

The present invention concerns systems and techniques for electronically enhancing images.

Video sensors of different types continue to proliferate both in military/surveillance and consumer electronics applications. Ten years ago, consumer grade video cameras were just beginning to gain popularity. From that time until today, there has been a proliferation of different forms of consumer electronics that can record and replay video imagery. These video recorders typically record analog video on standard tape (such as 8 mm and VHS formats), and new all-digital cameras are starting to gain popularity.

In addition, digital still cameras have been growing in popularity. These cameras contain relatively standard video sensors, typically the same sensors as are used in the video cameras, and are designed to grab individual video frames and store them into an on-board memory for later download to a PC. While these cameras are popular, those who used them have discovered that cameras which provide higher-quality images are expensive and even these cameras produce pictures that are disappointing, in quality, compared to pictures taken with standard film cameras under similar conditions.

A large variety of video sensors have been developed for the high-performance and military markets. These sensors include standard visible (e.g. TV) imagers, infrared (IR) sensors that can detect heat as well as visible and non-visible light wavelengths, intensified night-vision sensors that amplify the amount of light seen in the scene and more exotic sensors that detect emanations in various other wavelengths. Various post-processing steps are used to improve the performance of these sensors.

US-A-4661986 discloses a method, and corresponding apparatus, for processing a plurality of monochromatic images of a scene to provide a single image having an enhanced depth of field. In one embodiment two monochromatic images A and B are processed.

The two monochromatic images are each analysed using a pyramid image analysing technique into N separate spatial frequency bands having a low resolution level (gn) and a plurality of higher resolution levels (L m) where m = O to n-1 each having a set of pixels. Corresponding levels, e.g. LoA, LoB from each image A and B are compared pixel by pixel and the pixels having the larger amplitude selected. That fuses the two images in a pyramid representation. The fused image is reconstructed from the pyramid representation.

In another embodiment the images are polychromatic. The images are split into three primary or complimentary-to-primary colour signals. Each colour signal is processed in the same way as for a monochromatic signal.

### SUMMARY OF THE INVENTION

The general theme of the present invention is to enhance the quality of digital imagery, either in video form or as still pictures, using digital image processing techniques which operate on multiple images to produce a single enhanced image. There are several advantages of using these methods, including the ability to enhance the performance of any video sensor regardless of its construction, and to provide enhancements that are otherwise impossible to achieve (such as combining multiple images to extend the sensor's depth of field).

According to one aspect of the present invention, there is provided a method for combining a plurality of colour images of a scene to provide an enhanced colour image of the scene comprising the steps of: receiving the plurality of the colour images (A, B) as separate luminance and chrominance image data; filtering the luminance image data representing the plurality of images to produce a respective plurality of luminance pyramids, each luminance pyramid having a low-resolution level and a plurality of higher resolution levels; filtering the chrominance image data representing the plurality of images to produce a respective plurality of chrominance pyramids, each chrominance pyramid having a low-resolution level and a plurality of higher resolution levels; additionally generating for each image at least one salience pyramid indicating the saliences of features of the image, each salience pyramid being a function (σ) of a space-scale representation of the image; combining features of the luminance pyramids and of the chrominance pyramids, of the images to be combined at all pyramid levels except the low resolution level, in accordance with a mapping function which is a function (δ) of the salience pyramids of the images to be combined to generate a single fused luminance partial pyramid and a single fused chrominance partial pyramid; processing the low-resolution levels of the plurality of luminance pyramids to generate one fused luminance low-resolution level; processing the low-resolution levels of the plurality of chrominance pyramids to generate one fused chrominance low-resolution level; combining the fused luminance low-resolution level with the fused luminance partial pyramid to form a fused luminance pyramid and combining the fused chrominance low-resolution level with the fused chrominance partial pyramid to form a fused chrominance pyramid; and reconstructing enhanced luminance and chrominance images from the respective fused luminance and chrominance pyramids and combining the enhanced luminance and chrominance images to form the enhanced image of the scene.

In one embodiment of the present invention each salience pyramid is a function of a luminance pyramid of the image.

In another embodiment, of the present invention the enhanced color image has enhanced depth of field relative to any of the plurality of color images; the step of filtering the luminance image data representing the plurality of images produces a respective plurality of Laplacian pyramids, each Laplacian pyramid having a Gaussian-filtered low-resolution level and a plurality of Laplacian-filtered higher resolution levels; the step of filtering the chrominance image data representing the plurality of images produces a respective plurality of Gaussian pyramids, each Gaussian pyramid having a Gaussian-filtered low-resolution level and a plurality of Gaussian-filtered high resolution levels; the generating step generates each salience pyramid as a function of a said Laplacian luminance pyramids; the combining step combines features of the Laplacian-filtered higher resolution levels of the images in accordance with a maximum magnitude function to generate the luminance partial pyramid and the chrominance partial pyramid; the step of processing the low-resolution levels of the luminance pyramids includes applying a maximum magnitude function to respective values of the low-resolution level to form the fused luminance low-resolution level; and the step of processing the low-resolution levels of the chrominance pyramids includes averaging respective values of the low-resolution level to form the fused chrominance low-resolution level.

This another embodiment concerns improving the depth of field of color images. Many electronic sensors are used with optics that provide only a limited depth of field. This is especially noticeable when the sensor has a relatively wide field of view, and the user wants to be able to take focused pictures of both foreground and background objects. Standard optics do not support extended depths of field with film cameras or with digital sensors in low-light conditions: this is a limitation of the physics related to the pinhole model of sensors. An example of this embodiment provides a single image having a wide depth of field by taking a plurality of images in different focal planes, each with the same aperture and integration time settings. Focused portions of the various images are fused to form the single output image. The fusion process is based both on the level of detail in each of the images and the relative saturation of the color pixels in the various images.

In a further embodiment of the present invention, the enhanced color image has enhanced dynamic range relative to any of the plurality of color images; the step of filtering the luminance data representing the plurality of images produces a respective plurality of Laplacian pyramids, each Laplacian pyramid having a Gaussian-filtered low-resolution level and a plurality of Laplacian-filtered higher resolution levels; the step of filtering the chrominance image data representing the plurality of images produces a respective plurality of Gaussian pyramids, each Gaussian pyramid having a Gaussian filtered low-resolution level and a plurality of Gaussian filtered higher resolution levels; the generating step generates each salience pyramid as a function of a said Laplacian luminance pyramid; the combining step combines the combining step (918) combines features of the Laplacian-filtered higher resolution levels of the images in accordance with a maximum magnitude function to generate the luminance partial pyramid and the and the chrominance partial pyramid; the step of processing the low-resolution levels of the chrominance pyramids includes the steps of generating a median mask having a plurality of locations corresponding to a respective plurality of locations in each of the chrominance low-resolution levels, each location of the median mask corresponding to a respective value in one of the plurality of chrominance low-resolution levels, which value is a median of all respective values in the chrominance low-resolution levels at the location; and fusing the plurality of chrominance low-resolution levels in accordance with the median mask; and the step of processing the low-resolution levels of the luminance pyramids includes the step of fusing the plurality of luminance low-resolution levels in accordance with the median mask.

This further embodiment concerns improving the dynamic range of color images. Many video and still image sensors can not provide a dynamic range that compares favorably to the performance of film or human vision. This leads to saturation of certain portions of the scene. This saturation appears either as blooming (i.e. portions of the image which appear too bright) or the lack of image detail in dark areas. A sequence of images taken for example with different settings for aperture and/or integration time may be combined into a single image that has better dynamic range than any of the individual images. The selection of which portions of the images are to be combined is based on the level of luminance detail in each of the images while the color pixels are averaged over the combined images.

The invention also provides a carrier including a computer program which, when run on a computer, processes a plurality of color images in accordance with a method of the present invention.

The invention also provides a computer programme which, when run on a computer, processes a plurality of color images in accordance with a method of the present invention.

The invention also provides apparatus for processing a plurality of color images of a scene to provide an enhanced color image of the scene comprising: a source of color images as separate luminance and chrominance image data; means arranged to process the luminance image data representing the plurality of images to produce a respective plurality of luminance pyramids, each luminance pyramid having a low-resolution level and a plurality of higher resolution levels; means arranged to process the chrominance image data representing the plurality of images to produce a respective plurality of chrominance pyramids, each chrominance pyramid having a low-resolution level and a plurality higher resolution levels; means arranged to additionally generate for each image at least one salience pyramid indicating the saliences of features of the image, each salience pyramid being a function of a space-scale representation of the image; means arranged to combine features of the luminance pyramids and of the chrominance pyramids, of the images to be combined at all pyramid levels except the low resolution level, in accordance with a mapping function which is a function of the salience pyramids of the images to be combined to generate a single fused luminance partial pyramid and a single fused chrominance partial pyramid; means which process the low resolution levels of the plurality of luminance pyramids to generate one fused luminance low-resolution level; means which process the low resolution levels of the plurality of chrominance pyramids to generate one fused chrominance low-resolution level; means which combines the fused luminance low-resolution level with the fused luminance partial pyramid to form a fused luminance pyramid and combines the fused chrominance low-resolution level with the chrominance partial pyramid to form a fused chrominance pyramid; and means which reconstructs enhanced luminance and chrominance images from the respective fused luminance and chrominance pyramids and combines the enhanced luminance and chrominance images to form the enhanced image of the scene.

BRIEF DESCRIPTION OF THE DRAWINGS

Figure 1 (prior art) is a block diagram of a conventional digital still camera.
Figure 2 is a block diagram of a digital still camera according to the present invention.
Figure 3 is a block diagram of exemplary circuitry suitable for use as the image processor shown in Figure 2.
Figure 4 is a block diagram of exemplary circuitry suitable for use as one of the video processing motherboards shown in Figure 3.
Figure 5 is a block diagram of a digitizer video processing daughterboard, suitable for use in the image processor show in Figure 2.
Figure 6 is a block diagram of a correlator video processing daughterboard, suitable for use in the image processor shown in Figure 2.
Figure 7 is a block diagram of a warper video processing daughterboard, suitable for use in the image processor shown in Figure 2.
Figure 8 is a flow diagram for a set of processes according to the invention that may be implemented using the image processor shown in Figure 2.
Figure 9 is a flow-chart diagram that is useful for describing a first embodiment of the invention.
Figure 10 is a flow-chart diagram that is useful for describing a second embodiment of the invention.
Figures 11 and 12 are functional block diagrams that are useful for describing a third image processing technique.
Figure 13 is a flow-chart diagram that is useful for describing the third technique.
Figure 14 is a flow-chart diagram that is useful for describing an alternative implementation of the third technique.
Figure 15 is a flow-chart diagram that is useful for describing a fourth image processing technique.
Figure 16 is a flow-chart diagram that is useful for describing a fifth image processing technique.
Figure 17 is a flow-chart diagram that is useful for describing an alternative implementation of the fifth technique.
Figure 18 is a flow-chart diagram that is useful for describing a sixth image processing technique which, in one form, is an embodiment of the present invention.
Figure 19 is a flow-chart diagram that is useful for describing a first alternative implementation of the sixth technique.
Figure 20 is a flow-chart diagram that is useful for describing a second alternative implementation of the sixth technique.
Figure 21 is a flow-chart diagram that is useful for describing a seventh embodiment of the invention.

DETAILED DESCRIPTION OF THE EXEMPLARY EMBODIMENTS

There is a large body of work involving enhancing and processing video from different types of sensors. These techniques can be described as addressing the different methods for enhancement that were mentioned above.

Within the digital still camera and video camera markets, there is widespread use of methods to generate high-resolution color video imagery from the Bayer-encoded video sensors. These color interpolation techniques are well-known, and many varieties of these methods are described in literature. However, other than color interpolation, there are few method used for enhancing video sequences.

There is a great deal of prior work in the area of explicit sensor physics and sensor technologies. Electronic methods such as intensified imagery, CMOS and CCD imaging techniques, and numerous other forms of sensor technology have been developed. Some of these technologies will be mentioned below, but, in general, each of these techniques are developed to improve the sensor itself through intervening at the sensor level itself, and not as a post-processing step.

A conventional prior-art digital still camera is shown in Figure 1. This camera includes a lens system 110 which focuses an image onto a CCD imager 112. The CCD imager 112 captures and digitizes the image as separate luminance (Y) and chrominance (U and V) components. These components are. then stored into a memory 114 for later downloading to a computer. The focus and aperture of the lens 110, the integration time of the imager 112 and the transfer of data from the imager 112 to the memory 114 is governed by a control processor 116 which translates user settings (not shown) into control signals for the various camera components.

Figure 2 is a block diagram of a digital still camera (or digital video camera) in accordance with the present invention. This camera also includes a lens 110, imager 112 and control processor 116. The camera also includes an image processor 118 and, if the processor 118 does not include sufficient internal memory, an optional memory 120 (shown in phantom). The control processor of the camera shown in Figure 2 controls the lens system 110 and imager 112 to capture multiple images in close succession. These images are processed by the image processor to produce a single enhanced image. The imager 112 may be a conventional CCD video imager which may capture 30 frames in one second or it may be a fast imager which may capture 300 frames per second. Using this second type of imager, the inventive methods described below may be used to produce individual images of an enhanced video sequence.

Figure 3 shows a real-time video processing system (VPS), suitable for use as the image processor 118, shown in Figure 2. The major components the VPS are:

A Processor Motherboard (PM) 122 which provides general-purpose microprocessors or digital signal processors (DSPs) 124 for controlling the dedicated video hardware, performing image analysis operations that are not easily mapped into the video hardware, and facilitating communications with other components that are not an integral part of the VPS system.

One or more Video Processor Motherboards (VPM) 126 which are the baseline video processing components within the VPS. Each VPM 126 contains dedicated, parallel-pipelined video hardware that is capable of performing operations on streams of video at a consistent rate (based on a global pixel clock). As shown in Figure 3, the VPM 20 also supports the addition of one or two daughterboards, called Video Processing Daughterboards (VPDs) 128 for specialized image acquisition, display, and processing devices. As illustrated, there can be one or more VPMs 126 within a single VPS system, each with its own set of VPDs 128.

A Global Video Bus (GVB) 132 defines a video backplane that enables video information to be transferred between the VPMs 126 of the VPS at, for example, 33 MBytes per second, and also for video to be transferred to and from the microprocessors 124 on the PM 122.

A Global Control Bus (GCB) 130 transfers control and status signals among the PM 122, the VPMs 126, and the GVB 130 of the VPS. Access by the PM 122 to control registers in the destination boards within the VPS is arbitrated over GCB 130. Typically, no video transactions are performed over this GCB 130.

PM 122 functions as the microprocessor core of the VPS. Two microprocessors 124 are actually used in PM 122 with a possibility of adding one or two more microprocessors 124 as daughterboard components. The primary function of the PM 10 is to provide the command and control of video processing operations that are performed by the VPMs 126 and their associated VPDs 128. Video processing operations within the VPS are configured using control registers in the video hardware, the each programmed operation is started by asserting an enable signal that defines the beginning of execution for that operation. These control registers are mapped into the memory space of the microprocessors 124. A high-level, C-callable hardware control library loaded on one or more of the microprocessors 124 is used to facilitate the coordination of the video hardware. In addition to the control function, the PM 122 provide image processing capabilities that cannot be performed more efficiently using the available dedicated hardware.

The VPMs 126 are dedicated video processing boards. All video hardware in the VPS operates on video streams in a parallel-pipelined fashion. This means that video data is read out of frame stores a pixel at a time, with appropriate timing signals framing the active video information. As this video flows through the system, it is processed by the various processing units on VPM 126. All processing components on VPM 126 are designed to work within this flow-through architecture for data processing. Each processing unit adds a fixed amount of pipeline delay in the processing, but maintains the data throughput of the system. Thus, the amount of time to perform an operation on a video frame is always deterministic, given a fixed amount of pipeline delay which depends on the operations being performed. Video routing through the system is performed through the use of a digital crosspoint switch in each VPM 126. This switch enables video from an input port to the VPM 126 or from the output port of any processing element on the VPM 126 to be routed to an output port of the VPM or to the input port of any processing element on the VPM. Also, the crosspoint switch enables video to be "fanned out" from one source to multiple destinations with no penalties. All hardware operations, including crosspoint switch routing, are defined through the programming of memory-mapped control registers on VPM 126. Each processing device, crosspoint connection, and storage device has a set of registers (not shown) that are manipulated to define specific operations. The microprocessors 124 are used to set up these control registers and enable the video operations to begin.

The global video bus (GVB) 132 routes video data among the VPS system boards. Video can be routed between pairs of VPMs 126, and between each VPM 126 and the PM 122. The GVB 132 may provides dedicated, hard routed data channels between the VPS system boards with a fixed topology. Alternatively, the GVB 132 may include active routing capabilities via a secondary crosspoint switch, implemented directly on the VPS active backplane.

The GCB 130 couples the PM 122 to the VPS system boards. Control register accesses by the PM's microprocessors 124 are performed using GCB 130. GCB 130 may be any standard address and data bus that is used by most types of microprocessors.

Figure 4 shows an exemplary configuration for the VPM 126. The VPM 20 provides the basic video processing functions for the VPS. Each exemplary VPM 126 may include the following components:

A 39x39 channel non-blocking crosspoint switch 202, 10 bits per channel, representing 8 bits of video data and 2 bits of timing information for each pixel of video data transferred over the crosspoint switch bus.

Four 1K x 2K pixel frame store memories FS1-FS4 (204-210). These frame store memories 204-210 are triple-ported, allowing full rate video reads and video stores simultaneously. A third random-access port is also provided for direct microprocessor access of the frame store memories.

Four pyramid generation modules 212-218. These pyramid modules 212-218 are implemented using a PYR-2 filtering ASIC of the type described in U.S. Patent No. 5,359,674 and U.S. Patent Application Serial No. 08/838,096 US-A-5963675. Each pyramid processing module 218 is associated with an 8-bit look-up table (LUTs) 220-226 for pointwise image transformations. Each pair of ASICs is configured so that they can be combined to perform pyramid operations on 16-bit data streams.

One configurable ALU (CALU) 228. CALU 228 allows pointwise operations to be performed on a pair of images. CALU 228 includes a timing compensator and a programmable image delay 230 at its input for automatic timing alignment, followed by a 16 bit input to 16 bit output (16:16) lookup table (LUT) and 32-bit accumulator.

One programmable ALU (PALU) 232. PALU 232 is used for multi-image operations. PALU 232 is comprised of a reconfigurable field programmable gate array (FPGA) with up to 16 Mbytes of DRAM. It supports four video inputs and two video outputs. A more detailed description of PALU 232 is provided in U.S. Patent Application No. 09/148,661 filed September 4, 1998 entitled DIGITAL SIGNAL PROCESSING CIRCUITRY HAVING INTEGRATED TIMING INFORMATION, also assigned to the present assignee.

Two VPD sites 234 and 236 are used for installing daughterboard components to specialize the VPS for different applications. Four different VPDs are described in more detail below. The exemplary VPMs 122, GVB 132, and VPDs 128 are synchronous with a single system-wide clock signal.

The VPM 20 uses a standardized video format for video transfers between VPMs 20, video storage modules, the GVB 30, and the PM 10. This video format is comprised of 8 bits of data per pixel, plus two timing signals that frame the active video data by indicating areas of horizontal (HA) and vertical (VA) active data. There is a fixed blanking interval between each active line in the image. This blanking period is defined with HA deasserted (low) and VA asserted (high). There also may be blanking periods at the beginning and the end of each image. All video data is synchronous with the VPS system clock.

The parallel-pipelined hardware within the VPS uses video framing signals with the data to delineate areas of active imagery and blanking for the video data. This information is, as mentioned above, instrumental in simplifying video devices within the VPS and making those devices easily programmable through software control. Another critical aspect of the VPS is providing synchronous starts for video processing operations. It is imperative that the video timing for multiple video paths be started in a synchronous fashion to ensure that the video timing begins with a known initial condition. Without this guarantee, the video hardware must always perform timing compensation when performing operations on multiple streams, since the initial differences in timing from multiple channels (also known as the timing skew between the channels) will be unknown. A common control signal, called RD_START, is provided within the VPS to provide synchronous starts for video read operations from source video devices. When RD_START is asserted (through a write to a register under microprocessor control), all previously enabled video source devices will begin reading out in a synchronous fashion. This provides the programmer with a known initial condition for video timing that is necessary for simplifying video timing analysis for subsequent processing. In a preferred embodiment, the RD_START signal is generated on a designated "master" VPM 20 (in a system with more than one VPM 20) and received synchronously by all VPMs 20, including the VPM "master," and all VPDs in the VPS. The use of a "master" VPM 20 does not limit the VPS from having multiple "masters" with more than one independent RD_START. Each RD_START may be controlled from a different source through a selected RD_START multiplexer. Multiple RD_STARTs allow for asynchronous independent video operations to be performed.

The CALU 228 is implemented using a Xilinx XC4010 FPGA or a Xilinx XC4028 as a CALU controller with dual FIFO buffers 230 at its input and a 512K x 16 SRAM bank. The input FIFOs 230 are programmable through control registers in CALU 228 to both automatically compensate for any timing skew between the two input video paths, and also to provide a deterministic, programmable delay between the two images.

The automatic timing compensation can also be implemented in the PALU 232, but since it does not have explicit memory components (FIFOs) external to the chip it needs to use internal resources. For this reason some applications may choose not to include the timing compensation in the PALU or it may compensate for smaller timing differences.

CALU 228 performs the pointwise image operation through a 16 bit input and 16 bit output LUT, which generates a unique 16-bit output value based on the two input pixel values. The LUTs are implemented in SRAM and are programmable through software. Common operations, such as image multiplications, additions, and so forth can be implemented using these LUTs in a known fashion. More complicated operations (such as generating angle and magnitude of gradient data based on the horizontal and vertical partial derivatives of an image) are also possible with the CALU LUTs due to their programmable nature. In fact, any dual-image operation can be implemented in the CALU LUTs if the transformation generates a single output value for each unique pair of input values.

CALU 228 also has internally a 32-bit image accumulator. This accumulator enables one of the input images, or the output of the CALU LUT, to be accumulated over the entire extent of the image. This enables a fast method of determining the average value of an image, and can also be used for operations such as full-image cross correlation computations.

Preferably, CALU 228, as well as all other ALUs and FPGAs in the VPS of the invention, is reconfigurable for different hardware functions, where the reconfiguration is from software on one or more of the microprocessors 12 of the PM 10 through a JTAG interface.

PALU 232 has been designed as a reconfigurable device for numerous different video operations. PALU 232 is designed to be programmed through JTAG control, a serial communication channel designed for testing devices using boundary scan, by the microprocessors 12 on the PM 10 after power-on reset. PALU 232 has four video inputs and two video outputs, providing 16-bit dyadic function capability to the VPS. PALU 232 has a 4M x 32 DRAM connected to it, so that a large variety of processing functions can be implemented through a software configuration that may make use of a large, 32-bit wide, memory bank. PALU 232 can thus be programmed to perform a host of different video operations, depending on the configuration data that is used to configure the device.

VPD sites 234 and 236 on VPM 20 are provided for expanding and customizing the capabilities of the VPS. Specialized video devices such as video displays, video digitizers, correlation units, image warpers, and other processing units can be incorporated into daughterboard designs and added to the VPS. Each VPD site 234 and 236 has up to six crosspoint inputs and six crosspoint outputs for video to and from the VPM's crosspoint switch 202 depending upon which VPD is installed. Also, each VPD has four interrupts associated with it to coordinate interrupt-driven hardware control.

As noted above, a critical concern for the design of the VPS of the invention was the efficient control of the hardware by a single or multiple processors. The video format, usage of the RD_START signal, and automatic timing compensation of the CALU 228 all enable the VPS to be easily and efficiently programmed in software. In order to allow the VPS to be controlled within a multitasking, multiprocessor environment, the VPM video devices are controlled through interrupt-driven control. Interrupts provide a method for task switching and task blocking while tasks are waiting for video operations to complete.

The important interrupts in the VPS are interrupts that signal the completion of a video operation. Explained another way, interrupts are generated by devices that serve as video sinks: video enters the device but does not leave the device. Devices and operations on the VPMs 126 that are important for interrupt generation are:

The completion of store operations for a frame store 204-210.

The completion of operations within the CALU 228.

The completion of operations within the PALU 232.

The completion of relevant operations on a VPD.

The control registers, LUT memories, and frame store memories on the VPMs 126 can be accessed by the microprocessors 124 on the PM 122 through the GCB 130. The exemplary GCB 130 is implemented as a CompactPCI™ bus where each VPM 126 has a PCI slave (GCB) controller 246 that decodes PCI access requests from the GCB 130 and forwards the access requests to the various devices on the VPM 126 via the local control bus 242 that is internal to the VPM 126.

The Video Processing Daughterboards (VPDs) are added to each VPM 126 to provide specialized functions. Each VPD has, in addition to a control bus, a number of video input and output ports that are directly connected to the VPM crosspoint switch 202. In an exemplary embodiment of VPM 126, two VPDs can be installed, with each VPD having up to six video input ports and six video output ports. Three sample VPDs implemented in the presently preferred embodiment of VPM 126 are described below with respect to Figures 5-8.

Figure 5 illustrates a digitizer VPD. The digitizer VPD is based on the Philips chip SAA7111A Video Decoder 502, that decodes and digitizes composite (CVBS) and component video (S-Video) data, both for National Television Standards Committee (NTSC) and Phase Alternate Line (PAL) television signals. The exemplary VPD employs three channels to digitize three asynchronous color video signals. The exemplary digitizer VPD also supports RGB input by digitizing each color component in a separate video decoder 502. A parallel D1 or other digital interface 504 is also included to handle parallel D1 or other digital inputs.

Video decoders 502 digitize data in 720 x 242 fields at 60 Hz (NTSC), or 720 x 288 fields at 50 Hz (PAL). Two digital channels are sent to the output, one for luminance only (Y) and one for interleaved U and V color components. This provides data in the 4:2:2 format as defined by SMPTE 125M and similar standards. Each video decoder 502 provides digital video data to two field buffers, Y field buffer 506 for the luminance channel and UV field buffer 508 for the color (U,V) channel. Buffers 506 and 508 provide optimized processing for the digitizer VPM by buffering the 13.5 MHz data from the video decoders 502, followed by reading a full field at the VPM system clock (e.g. 33 MHz) into the VPM frame stores and/or other processing clemcnts.

In addition, a programmable interrupt is preferably provided that indicates to the system controller when data can be read from the field buffers 506 and 508 at the VPM clock speed without "overtaking" the video writing of the field data at 13.5 MHz. This provides maximum throughput of the data and processing functions on the VPM 126 while minimizing latency of video data from the digitizer VPD.

Figure 6 illustrates an exemplary correlator VPD. The correlator VPD is designed for fast motion estimation, stabilization, and image fusion. It contains three CALUs 228 with FIFOs 230 and SRAM, identical to the CALU 228 with FIFOs 230 and SRAM on the VPM 126. In addition, the outputs of CALUs 228 are each followed by a PYR-2 pyramid processing ASIC 602 and a LUT 604, similar to the PYR-2 and LUT combination (e.g., 212, 220) on VPM 126. Many applications for motion estimation and fusion require a filter operation following a correlation or other computation performed in the CALU 228. The PYR-2 ASIC 602 can also be set to pass-through the two video data channels.

Figure 7 illustrates an exemplary warper VPD. The warper VPD 28 is designed for real-time parametric image warping and includes two SRAM banks 702, 704 for simultaneous image acquisitions and warping. The warper VPD also performs an address generation for parametric image transforms using address generator 706. In an exemplary embodiment, the transforms are affine (six parameter) transforms, and address generator 706 is implemented as two FPGAs (Altera EPFIOK70). These FPGAs are large enough to be able to support the implementation of bi-cubic transforms or projective transforms (a division of two affine transforms). An optional 32-bit flow field input (16 bits for X and 16 bits for Y) can be added to the parametric transformation by adder 708 by receiving four video data streams for the VPM 126 (*i.e.*, from four frame stores). The generated flow field can also be sent to the VPM 126 as four video data streams. The exemplary warper VPD also includes a bi-linear interpolator 710 which is accurate to 1/32 pixel resolution.

The circuitry described above is sufficient to implement all of the signal processing functions described below. While these functions are described as being performed by this special purpose signal processing circuitry, it is contemplated that they may be implemented using other circuitry such as cascade-connected pyramid processor integrated circuits, or on software that runs on a general purpose computer. When these signal processing functions are implemented in software, the program may be embodied on a carrier such as a magnetic disk, optical disk or a radio-frequency carrier wave.

The first embodiment of the invention concerns processing several images to generate a single image having a wider dynamic range than any of the component images. Current sensor technology uses a standard set of techniques for creating the best dynamic range for a given set of imaging conditions. Common techniques include automatic gain control, gamma correction, and automatic aperture control. Each of these methods is used to adjust the imaging parameters of the sensor, either by increasing the amount of light incident on the sensor (automatic aperture/iris), by amplifying the response of the sensor components (automatic gain), or by applying nonlinear transfer functions to the imagery to improve the visual appearance of the sensor imagery (gamma correction).

None of these techniques addresses a basic limitation of the sensor: that it can produce a response over only a finite range of signal strengths. These methods attempt to adjust the sensor to accommodate for different imaging conditions, but within the known and invariant dynamic range that is intrinsic to the sensor.

Advanced CMOS sensors currently use a method of dynamic range enhancement that effectively applies multiple integration times to each sensor location. Thus, after the full integration time is complete, the resulting output pixel is the result of multiple integration intervals with varying durations. This is accomplished by defining a maximum saturation of the pixel intensity over time. In practice, pixels are adjusted such that within very bright regions, the pixel will saturate in voltage at a threshold level that is below that of the true maximum voltage for that pixel. At the very end of the integration interval, charge is allowed to collect beyond this threshold until the maximum saturation level for the pixel is reached or, alternatively, when the integration time for that field ends. This method of dynamic range extension does indeed provide for dynamic range improvement, but at the expense of reduced intensity resolution. Bright regions do show features, but these features tend to be low contrast and washed out in comparison to other areas of the scene.

The use of multiple integration times for each pixel at the sensor level also does not address an important issue of sensor performance: maximizing the features found in a local region of the image. These selection techniques operate on a pixel-by-pixel basis, and do not take into account the local contrast energy of the image. Thus, this method addresses the issue of saturation and blooming, but does not address the issue of maximizing the contrast energy of the sensor imagery about local points in the scene.

A second embodiment of the invention concerns processing several images to generate a single image having a wider depth of field (also known as depth of focus) than any of the component images. The depth-of-field for a given optical system is intrinsic to the architecture of the optics in the sensor, and is not related to the imaging-array of the sensor. Depth-of-field is a direct result of point-projective (so-called pinhole) cameras, which can adjust the focus based on adjustments of the focal length of the camera, where focal length describes the effective distance from the pinhole aperture to the imaging plane. With these optics, depth-of-field can be extended by adjusting the size of the pinhole aperture in the optics, but at the expense of simultaneously adjusting the amount of light that is incident on the imaging plane.

There is currently no method for extending the depth of field for a sensor while maintaining consistent aperture and integration time settings, because these are physical constraints.

A third image processing technique concerns processing multiple images, taken close in time and of a single scene, to select the one image which exhibits the least motion blur. One of the most difficult picture-taking situations is when the camera and the operator are on a moving, unstable platform. In this situation, when the integration time is large, there is considerable motion blur in the pictures taken. Currently, the only way to reduce this motion blur is (if possible) to reduce the integration time of the sensor. This, however, also reduces the brightness and contrast of the image produced by the sensor.

Currently, there is no method for automatically selecting a video frame that does not have significant motion blur. Processing methods are available for de-blurring the video frame after processing, but de-blurring methods are known to distort the imagery and cannot replace image features that have been irrevocably lost due to the blurring process.

A fourth image processing technique concerns processing multiple images taken of a poorly illuminated scene to produce a single image which has greater brightness and contrast than any of the component images. Current sensor technology provides multiple methods for handling low-light performance. The simplest of these is to open the aperture / iris of the sensor to enable more light to be incident to the sensor, and to adjust the integration time of the sensor. There are, however, times when the aperture settings and integration times cannot be arbitrarily increased because, for example, either the sensor or components in the scene are in motion. When the integration time is large and the relative motion of the sensor and the scene being imaged is large, there may be significant motion blur artifacts in the resulting image. Thus, with today's sensor systems it is difficult to get sharp, high-contrast imagery of dark scenes without motion blur.

Intensified imaging sensors exist that can amplify the light levels and capture images of poorly illuminated scenes. These methods, however, have their own limitations, including high cost, significant amplification of noise as well as video signal, and significant hardware costs.

A fifth image processing technique relates to a signal processing method that uses multiple images taken of a scene to reduce the effects of optical-path perturbations such as may occur when the image is viewed through significant thermal or atmospheric variations. These effects, referred to below as scintillations, are a result of the conditions under which the scene is imaged, and are not an caused by the sensor. Current sensor technology cannot correct for these distortions.

Electronic processing can compensate for global motion effects, such as electronic scene stabilization, but these are global and not locally-varying effects. Also, such digital motion estimation is typically parameterized, and thus relies on a relatively simple geometric relationship between the video frames. In contrast to this, scintillations are manifest in video sequences as local, highly nonlinear motion that can be modeled with simple transformations only on a very local level (i.e., with small patches in the image). Thus, the global motion estimation and transformation methods do not effectively remove the scintillations.

Other spatiotemporal filtering methods, such as time averaging of video sequences, can remove scintillation effects but at the expense of image sharpness. Rather than having a video sequence with scintillation, spatiotemporal filters produce images that are smoothed over time and therefore blurry. The scintillation distortions also tend to be continuously varying, therefore, outlier rejection filters such as median filters are ineffective at reducing scintillation effects.

A sixth image processing technique concerns a method for enhancing the quality of the images in a video sequence. Traditionally approaches have been based on sharpening individual image frames. However the improvement in picture quality is usually limited. On the other hand the approach disclosed below, because it operates on multiple images in the sequence, allows dramatic improvement in image quality.

Before the methods for digitally enhancing imagery from a given sensor are explained in detail, it is useful to describe methods of using the sensor in different applications.

Current picture taking relies on significant amounts of user interaction to guide the acquisition process. In standard video and still cameras, as an example, the user selects the focus distance manually or through auto focusing on a particular portion of the scene, then keeps the focus fixed after that adjustment. In this way, the operator can select a focus position at a fixed distance from the camera to create different focus effects.

Likewise, video and still cameras automatically or under manual control establish an integration time and aperture / iris setting. In this way, the ambient light level can be established jointly with the amount of motion that can be tolerated.

A common thread of all of the embodiments of the subject invention is to use multiple aligned input video frames to generate a single output video frame, or to generate a single still output image. Rather than placing the frame selection and combination process under manual control, electronically enhanced sensing can vary the imaging parameters automatically. Thus, these methods can be implemented even when the operator has minimal knowledge of the imaging process that is taking place.

As an example of the potential benefit of this sort of sensor enhancement, consider the benefits of high-frame rate video sensors. These sensors can provide video frames at rates much higher than standard definition video signals, up to 300 frames/sec is current state-of-the-art, and this is improving. If such a sensor were used in conjunction with electronically enhanced sensing methods, then the parameters for imaging could be adjusted automatically 10 times within a single standard video frame time. Using this sort of approach, it is, therefore, possible to generate a 30 frame/sec video sequence that exploits the information of 10 times that much video. During the standard video frame time, different settings for focus and integration time can be used. Likewise, 10 frames can be aligned to a common coordinate system and combined into a single video frame that has enhanced spatial resolution. Alternatively, 10 aligned video frames can be accumulated with a very short integration time, providing the operator with sharp, high-contrast imagery even in conditions of low light.

This observation, however, does not preclude the use of standard video sequences for enhanced image sensing. Even standard video rate information can be combined over time to remove scintillation, improve resolution, and extend depth of field and focus of both still images and video sequences. Furthermore, these methods can be provided within a more manual framework that enables an operator to select different frames for combination. This is perhaps most relevant with digital still cameras, when multiple images are acquired on a manual basis and recombination does not have strict time constraints.

The largest class of enhancement methods described below is based on the same underlying technique of multiple image fusion. This section, with reference to Figure 8, provides an overview of the fusion process, and for methods of enhancement that are based on fusion, namely dynamic range extension, depth of field extension and image sequence quality enhancement.

The first portion of this section is an overview of the basic fusion process. Then, specific enhancement methods based on the fusion process are described. Prior work on the use of pyramid filters in the fusion process to merge two images has typically focused on operating on two images which are both intensity images and/or which are obtained from two different sensors (e.g. visible and IR images). One exemplary method for fusing two images is to first decompose each image into a Laplacian (high-pass filtered) pyramid, where the pyramid has a Gaussian (low-pass filtered) image at it's highest level. The next step is to define a relative saliency for the corresponding parts of the image at each level (e.g. which of the corresponding parts has a greater amplitude). The more salient features define complementary sets of masks for each pyramid decomposition. The masked image portions are then combined into a single pyramid which is used to regenerate a composite image. This general method may be improved by doubling the density of the Laplacian images. Double-density Gaussian pyramids are constructed as follows. The highest resolution image is retained at full resolution. To generate level 1 of the pyramid, the highest resolution level image is low-pass filtered without subsampling. Subsequent double-density Gaussian pyramid levels are computed recursively through low-pass filtering the double-density images of the previous level with an additional low-pass filter, then subsampling the filtered result. The second low-pass filter used has a cut-off frequency of 1/2 that of the standard Gaussian low-pass filter used with standard single-density Gaussian pyramids. Double-density Laplacian pyramids are computed from the Gaussian pyramids through filtering each double-density Gaussian pyramid image with the second low-pass filter, then subtracting, from the double-density Gaussian image, the filtered version of that same image. In summary, this fusion method involves the selection and combination of features from multiple images at multiple orientations and scales in the framework of a pyramid filter, then reconstructing a single image from the combined features also within the pyramid filter.

One aspect of the present invention concerns methods for performing image fusion on images having multiple components, such as color images in the RGB (red-green-blue) and YUV (luminance, saturation, and color). A naïve approach to image fusion in color may include performing image fusion separately and independently on each color plane, then providing the resulting three color planes as a single color image. In practice, this does not work for two reasons:

First, the color components of an image are represented, for example, by their saturation and color. This information (especially color) does not have a meaningful mapping in spatial scale-space; in other words, multi-resolution representations of saturation and color information do not have a straightforward interpretation, and are dependent on the mapping of the color space itself. Therefore, the selection process does not have the same ramifications in color space as it does for intensity-only space.

Second, a single color is really a combination of three different values (R, G and B; Y, U and V, etc.). Although these values can be represented as a vector and mapped into different three-dimensional spaces, each color is still a three-dimensional value. Attempting to recombine the color components separately breaks the dependencies in the color components, and does not produce the desired fusion effect.

Fusion of intensity images can be accomplished by selecting and fusing gray-level pixels with neighboring pixels at increasing levels in the pyramid. The resulting composite image captures the information from both images, subject to the specified selection function. Because any vector representing a color has weighting associated with each component, independently selecting components pair-wise from two vectors yields a vector that does not satisfy the original weighting and, consequently, creates an artifact.

Intuitively, what is desired is to be able to perform fusion on multiple images so that particular effects, such as merging images having multiple focal planes or differing dynamic ranges, will be enhanced under the constraint that the colors remain representative of both images. Therefore, the result of the fusion process applied to color images should preserve both color blending consistency (i.e., the color from the component images should be preserved or be the result of a fusion of the original colors) and color spatial consistency (i.e., the boundaries between colors should be preserved).

The first criterion, *color blending consistency*, stresses that the color value at a particular pixel should be the result of a blending of the colors of the original images rather than an arbitrary value obtained by the composite process. The second criterion, *color spatial consistency,* addresses effects which can be described as blooming or color aliasing.

Before investigating the application of the fusion process to enhancing color images, it is helpful to review the fusion process. The fusion process applied to two single plane image, A and B, yielding a composite image C is shown in Figure 8 and can be outlined as follows. The input images A 810 and B 812 are processed by pyramid processors to produce image pyramids 814 and 816. These image pyramids are processed according to respective saliency functions 818 and 820 to produce respective saliency pyramids 822 and 824. A selection process 826 is applied to the saliency pyramids 822 and 824 to generate 828 a mask 11 that defines which features from each level of the pyramid to produce the pyramid representation of the fused image. Using this mask, the image pyramids 418 and 416 are combined by a summing function 830 to produce the pyramid representation (not shown) of the fused image. This pyramid representation is then used to reconstruct the fused image 832.

For this process to be valid, the images must be taken so that the same scene is imaged and be registered. Not having registered images may cause unpredictable results. If the images taken are not of the same scene, then the result may include artifacts of image blending. Image registration techniques are well known and are described, for example in an article by J. R. Bergen et al. entitled "Hierarchical Model-Based Motion Based Estimation," European Conference on Computer Vision pp 237-252, Santa Margerita Ligure, May, 1992. Image registration may be performed, for example by applying a parametric transformation, such as an affine transformation, to one image which will bring the one image into alignment with the other image. The parameters for the transformation are determined by comparing the one image to the other image using spatio-temporal derivatives of the two images to compute the motion between the images. Alternatively, two images may be compared to generate a motion vector field (also known as a flow field) which describes the displacement of objects from the one image to the other image on a pixel-by-pixel basis. The motion vector field may be generated using the correlator VPD, described above with reference to Figure 6, and the one image may be warped into alignment with the other image using the warper VPD, described above with reference to Figure 7.

This section describes pyramid constructed for the goal of fusion. U.S. Patent 5,325,449, entitled METHOD FOR FUSING IMAGES AND APPARATUS THEREFOR to Burt et al. includes a description of pyramid construction, image fusing and the architecture of an exemplary pyramid processor, such as the PYR2 processor shown in Figures 4 and 6.

A Laplacian pyramid is constructed for each image using the FSD (Filter Subtract Decimate) method. Thus the $k^{th}$ level of the FSD Laplacian pyramid, $L_n$, is constructed from the corresponding Gaussian level and the Gaussian convolved with the 5x5 separable low pass filter *w* having one-dimensional component horizontal and vertical filters h and v, where h = (1/16) [1 4 6 4 1] and v = (1/16) [1 4 6 4 1]$^T$.

$$L_k = G_k - w * G_k$$

$$= (1 - w) * G_k$$

Because of the decimation process and because w is not an ideal filter, the reconstruction of the original image from the FSD Laplacian results in some loss of information. To account for some of the information lost an additional term is added to the Laplacian. This additional term is obtained by subtracting the filtered Laplacian from the original Laplacian.

$$\tilde{L}_k = L_k + (1 - w) * L_k$$
$$= (2 - w) * (1 - w) * G_k$$

The addition of this term has the effect of allowing the reconstruction to restore some of the frequency information that would be, otherwise, lost. In addition, the sharpness of the reconstructed image is increased. In the materials that follow, references to the Laplacian of the image arc to this modified Laplacian.

The saliency computation processes 818 and 820, labeled σ, expresses a family of functions which operate on the pyramids 814 and 816 of both images yielding the saliency pyramids 822 and 824. Effectively the saliency processes may be functions which operate on the individual pixels (such as squaring) or on a region.

The saliency function captures the importance of what is to be fused. When combining images having different focus, for instance, a measure of saliency is the crispness with which the images appear in different portions of the image. In this instance, a suitable measure is one that emphasizes the edginess of a particular point of an image. Suitable choices are, therefore, functions that operate on the amplitude of the image such as absolute value or squaring. The saliency pyramid for processing such an image could be expressed as:

$$\sigma_k(L_{Ak})=(L_{Ak})^2$$

If two aligned images, A and B, from the same scene have different focal lengths, then for a given image position (i,j), the salience of one of the image may be greater than the other one. This suggests that for level k at position (i,j) information should be extracted from the one image having larger saliency value implying that the edge is crispier and hence in focus. While this comparison and binary decision operation is satisfactory for two single images, the same operation performed over a sequence of images, however, the operation, yields a flickering image for areas in which the degree of edge-ness is approximately equal. The selection of the values from one image over the other image in regions having only a small gradient appears to be controlled more by the noise in the digitization process than the actual information contained in the image. While this effect is more visible with images obtained from different sensors, it can be greatly reduced by using a double-density Laplacian pyramid, as described above.

The applications described below use Laplacian pyramids. It is contemplated, however, that at least some of the operations, for example, the computation of the saliency function, could operate on Gaussian pyramids or any other scale-space representation of an image. The choice of the type of pyramid would then depend, as the metric of saliency, on the type of information to be fused. This generality of selection and decision procedure are illustrated in Figure 8 by having the pyramids, selection and decision functions, and reconstruction operation not being conditioned on the Laplacian.

The selection process 826, labeled δ, expresses a family of functions that operate on the saliency pyramids, 822 and 824, obtained from the saliency computation process. The result of this process is a pyramid mask 828 which defines a selection criteria between the pixels in the two images. The selection process for the level *k* can be expressed as follows:

$$M_k = \delta_k(\sigma_k(L_{Ak}), \sigma_k(L_{Bk}))$$

$\delta_k$ identifies the decision function for level *k* yielding the selection mapping. One exemplary selection function is the maximum or max function. This function may be expressed as a mapping:

$$L_{Ck} = M_k L_{Ak} + (1-M_k)L_{Bk}$$

This mapping can be used to generate the fused image for level *k*.

$$M_k = \begin{cases} 1 & \sigma_k(L_{Ak}) > \sigma_k(L_{Bk}) \\ 0 & otherwise \end{cases}$$

This type of function is known as a hard-blending function, since the generated map is binary. If, however, the weight for a particular position on the image is not binary then the composite image will be a blend of the data at the two positions. It is this type of blending which can be used to prevent flickering. Namely, the mapping mask can be smoothed by some filter a prior to the reconstruction of the composite image.

To allow this process to respond to different image characteristics, a softer blending function is introduced. This function depends on the value of parameter $\gamma$. In particular, two functions, $1_b$ and $h_b$ are defined as follows.

$$l_b = \frac{1}{2}(1-\gamma),\ h_b=\frac{1}{2}(1+\gamma)$$

and for each pixel position (i,j)

$$z_1 = \sigma_k(L_{Ak}(i,j)),\ z_2 = \sigma_k(L_{Bk}(i,j)).$$

then

$$\mu = \begin{cases} \frac{1}{2} & z_1 = z_2 \\ \frac{z_1}{z_1 + z_2} & otherwise \end{cases}$$

The value of $\mu$, $l_b$ and $h_b$ are then be used during the reconstruction process.

The reconstruction process 830, labeled $\Sigma$, combines each level from the pyramids of the original images in conjunction with the pyramid mask to generate the composite image, C.

The reconstruction process iteratively integrates information from the highest to the lowest level of the pyramid as follows:

$$L_{Ck} = M_k L_{Ak} + (1-M_k) L_{Bk}$$

$$C_k = L_{Ck} + w^*[C_{k+1}]\uparrow 2$$

where, $C_k$, represents the reconstructed image from level *N*, the lowest resolution level, to level k and the term "$\uparrow$2" refers to the expand process. The expansion process consists of doubling the width and height of the image by introducing columns and rows of zeros at every other column and row in the original and then convolving the resulting image by the w filter. The lowest resolution level in the pyramid, *N*, may be blended using a particular function $\beta$:

$$C_N = \beta(G_{AN}, G_{BN})$$

One possible function for $\beta$ could be the average of the two Gaussians. At the level N, the Gaussian captures the contrast for a region; hence the choice of $\beta$ depends on the desired effect.

If the mapping function is the soft blending described above, then $L_{Ck}$ is expressed as a function of *N*, $l_b$ and $h_b$. Now let,

$$a = L_{Ak}(i, j),\ b = L_{Bk}(i, j),\ c = L_{Ck}(i, j).$$

where (i,j) refers to a position in the image, then

$$c = \begin{cases} a & \mu < l_b \\ b & \mu > h_b \\ \mu a + (1-\mu) b & \text{otherwise} \end{cases}$$

The fusion process encompasses many different types of image enhancements based on the choice of the original images and the result desircd in the composite image. From the description above, several controls for the generation of the composite image can be identified. These can be noted with respect to the stages of the fusion process:

- *Saliency:* The function σ 818 and 820 and the associated scale-space representation of the image in which the salience may be identified are two of the choices which can determine the type of enhancement. This stage may also include more than a single function using different saliency measures components for the different images to be fused, or different saliency measures for a single image resulting in the generation of more than one saliency pyramid for each image.
- *Selection*: The choice of the function δ 826 depends on the previous choice of σ and, as discussed above, the generated mapping to form the mask M 828 may depend on additional parameters.
- *Reconstruction*: One of the components which may vary is the choice of the basic function, β, affecting how the reconstruction at the highest level of the pyramid is performed.

The flexibility identified above allows the fusion process the ability to express multiple enhancing effects. Having completed an overview of the fusion process, the description of the exemplary embodiments of the invention will focus on the fusion of color images.

As pointed out previously, fusing color images requires a reconsideration of how the fusion process is performed. In particular, it is desirable to consider how the different planes in a color image participate in the fusion process. There are many different kinds of color image representations, and the contribution from the different components depends on the chosen representation and the desired result.

To gain a better understanding of the interplay of these components vis-à-vis a specific composite effect, it is helpful to describe the choices used in achieving the enhancement for two example applications.

For the enhancement of images with different focal length and differing dynamic range, the color image representation may be chosen as YUV. These components were selected to consider *luminance, saturation*, and *hue* as means to characterize the desired effects in the composite image.

In the case of generating a single image having a large depth of field (i.e. having the best focus in all parts of the image), it is desired that the structural details of the image be emphasized while the color and its saturation are preserved. Luminance is the component most prominent in leading to a composite image having all the parts in focus. When extending dynamic range of the sensor, on the other hand, it is desirable to consider both luminance and saturation in the selection process. This criterion is dictated by the contribution which both luminance and saturation have to the dynamic range of a color image.

When one of the components is predominant in the salience and in the selection process, then the pyramid mask generated by the predominant component can be used to blend the other components. This choice guarantees that every pixel in the image is represented by a vector and both color consistency criteria, previously outlined, are satisfied. Then the blending process, hard or soft, can use the specified mask to combine the other bands.

In the *YUV* representation *Y* represents the luminance of the image. Typically the luminance component of the image has a higher bandwidth than either of the *U* or *V* color difference components. Thus, both the salience and the selection functions used to produce a fused image having the best depth of field is based on the Laplacian pyramid of the *Y*-components. Since the images have similar saturation and hue, the contribution from both images for the U and V components are blended based on the mapping determined using the Y components of the two images.

One exemplary method for fuse two color images under the focus variation the choices for the functions is shown in Figure 9.

The first step in Figure 9, step 910 aligns the images to a common coordinate system. This is desirably the coordinate system of the last image in the sequence. Accordingly, in the exemplary embodiment shown in Figure 9, the last image is selected as the reference image. The alignment technique used may be a parametric transformation, as shown in step 910, or it may involve calculating a motion flow field for each image relative to the reference image and then warping each image to the reference coordinate system. The next step in the process, step 912, builds the Laplacian pyramid for the luminance component of the sequence of images. At the same time, step 914 builds Gaussian pyramids for the *U* and *V* components of each of the images. Next, step 916 applies the salience function to all of the luminance pyramids to generate respective salience pyramids. At step 918, the selection function selects the features to be blended in both the luminance and chrominance (*U* and *V*) pyramids using hard blending based on the luminance saliency pyramids. This selection function is applied to all levels of the pyramid except for the pyramid level N representing the lowest-resolution image. This pyramid level is blended in steps 920 and 922. Step 920 blends level N of the luminance pyramids by hard-blending the Gaussian images using the mask from level N-1 that has been smoothed and decimated. Step 922 blends level N of the chrominance pyramids by averaging the Gaussian images. The final step, 924 reconstructs the fused image by reconstructing each of the *Y, U* and *V* pyramids.

Figure 10 is a flow-chart diagram which describes the process of fusing images having different dynamic range information. For these images, both the luminance and saturation information are relevant. The exemplary process assumes that the sequence of images are taken after a short time from one another, and therefore the color or hue is approximately constant in the images. This assumption is not unreasonable when the task is to combine multiple images where portions of the scene being imaged appear under-exposed in one image and overexposed in another. By varying the dynamic range, certain structural information is revealed. Clearly if the images have been taken over a longer period of time, then the hue is subject to change.

Thus, the exemplary process shown in Figure 10 assumes that, in the dynamic range fusion process, hue remains constant while luminance and saturation are related. Areas that have high saturation relate to portions of the image that are over-exposed and appear very bright. Areas that have very low saturation relate to areas that are dark. In both cases the detail information is poor. In portions of the image where there is substantial contrast, the luminance data provides a valid selection criteria. These observations are important because they provide a means for determining the functions to be used.

The first step in figure 10, step 1010, aligns all of the images in the sequence to a reference image. As in the depth of field process, the reference image for the exemplary dynamic range process is the last image in the sequence.

After step 1010, the process, at step 1012 builds Laplacian pyramids for the luminance (*Y*) components of all of the images in the sequence. At the same time, step 1014 builds Gaussian pyramids for the corresponding chrominance components of all of the images in the sequence. Next, step 1016 applies the salience function to the luminance pyramids in order to generate the salience pyramids that are used to fuse the images in the sequence.

At step 1018, a hard blending selection function, based on the luminance salience pyramids, is applied to generate the combining masks for both the luminance and chrominance image pyramids. This blending function is applied to all levels of the pyramids except for the lowest resolution level, N.

The N-Levels of the pyramids for both the luminance and chrominance image components are combined in step 1020. This step uses the saturation level as indicated by the chrominance pyramids (*U* and *V*) to combine the N-Levels of all of the luminance chrominance pyramids. In particular, the sections of the N-Level pyramids selected for combination in step 1020 are those having saturation values closest to the mean of the saturations of all of the images in the sequence. Step 1020 implements the basic function, $\beta$, described above.

After step 1020, a Laplacian pyramid has been constructed for the composite image. At step 1022, this pyramid is used to reconstruct the output image. As described above, this output image has a dynamic range which exceeds the dynamic range of any of the output images. The method described with reference to Figure 10 operates on a sequence of images which consists of at least two images.

Other methods for fusion are also possible, which highlight other aspects of the imagery. For example, a selection function can be considered which maximizes the saturation of an image, or that favors a certain type of color. Depending on the different mappings used for color space (including but not limited to YUV and RGB), other selection and emphasis methods may be used.

A third image processing technique concerns processing multiple images, taken close in time and of a single scene, to select the one image which exhibits the least motion blur. Human operators are frequently faced with the problem of getting sharp images while they arc moving, and while the camera is moving or otherwise unsteady. When there is sufficient light, it is possible to decrease the integration time of the sensor until the motion blur artifacts can be removed. In some instances, however, it is difficult to adjust the integration time of a moving imager to obtain an image which has desirable levels of brightness and contrast but does not exhibit motion blur.

In many instances, the motion induced on the camera is sporadic and random. This sporadic nature indicates that some video frames may have minimal amounts of motion blur, while other frames have significant amounts of motion blur.

The idea behind selecting key frames is to simply select the best image out of a sequence of images. The "best" image is usually defined as the image that exhibits the least motion blur. For any sequence of frames, one frame in the sequence will have less motion blur than any other frames and, thus, will be more desirable than any of the other images for storage and display. Any image selected at random (or arbitrarily by the operator) does not have a guarantee of quality, even in a relative sense when compared to other frames taken at a time close to the time of the shutter press.

Selecting the frame with the best focus can be determined through tracking the total image energy for each video frame, and choosing the frame with the highest energy level. Given a Laplacian pyramid of a given video frame

F(t):

$$L_k = G_k - w * G_k$$
$$=(1 - w) * G_k$$

The energy measure for this frame F(t) is the sum over each pyramid level of the squared Laplacian values.

$$F(t) = \sum_{k=0}^{N} (L_k)^2$$

Through the analysis of the deviations of the image energy at different resolutions, the effects of motion blur can be tracked. Specifically, in the sequence, it is desirable to select the image with the maximum energy in all frequency bands, starting the comparison from the lowest resolution level to the highest resolution level.

Figure 11 is a block diagram of exemplary signal processing circuitry suitable for use in the third technique which automatically selects one image frame from a sequence of frames to minimize motion blur in the image of the scene.

As shown in Figure 11, an input terminal IN is coupled to receive image data from, for example, a CCD imaging array. The exemplary imaging array (not shown) provides frames of image information at a rate of 30 frames per second. The exemplary embodiment of the invention shown in Figure 11 stores sequential frames in each of five frame store memories 1112, 1114, 1116, 1118, and 1120. The input signal IN is also applied to a control processor 1110 which monitors the input signal, to determine when a new frame image is being provided, and cycles through the frame store memories 1112 to 1120 to store the new images.

When each of the frame memories 1112 through 1120 contains an image, the processor 1110 processes each of the images to determine which one has the least amount of motion blur. This process is described below with reference to Figure 13. The exemplary embodiment includes five local memories 1122, 1124, 1126, 1128, 1130 which are used to hold temporary data, such as the image pyramids derived for each of the images in the five frame store memories. Once the processor 1110 has determined which of the images held in the frame store memories 1112 through 1120 includes the least amount of motion blur, it controls a multiplexer 1132 to provide that image as the output signal OUT.

Figure 13 is a flowchart diagram that illustrates the operation of the circuitry shown in Figure 11. In order to be able to compare the energy in the different images, it is desirable that the energy be evaluated over the same portion of the scene. Hence, prior to energy computation, it is desirable to register all of the images to a common coordinate system and to determine a common region, for the images that are being processed.

Thus, the first step in the process, step 1310 is to align all of the images in the frame stores 1112 through 1120 to a common coordinate system. In this instance, the exemplary circuitry may align the images in frame store memories 1112, 1114, 1118, and 1120 to the image held in frame store 1116. As described above with reference to Figures 9 and 10, the alignment scheme used maybe a parametric alignment or an image warping based on a flow field.

Once the images are aligned, step 1312 is executed to generate Laplacian pyramids for the common portions of all of the images. Step 1312 also marks all images as being active and sets the variable LV to zero. Next, step 1314 calculates an energy value for each of the pyramids at resolution level LV. Step 1314 then compares each of these energy values and sets the pyramids with low energy values at the resolution level LV to be inactive.

Images that are blurred at lower level in the pyramid will contain less energy and their quality will not increase at higher levels in the pyramid. This criterion is quite strict and subject to noise, especially when the blurring is perceived only at the highest level of the image. Hence, it is desirable to propagate more than one image and eliminate any one when this appear to be significantly more blurred than the others. The criterion governing the image selection is based on the actual distribution of image energy over the images at any one level. It can be defined as follows:

$$(m_{k,Max} - m_{j,k}) < \sigma_{k,Max} \cdot \rho_k,\ j=1..M_k \text{ and } M_k = |V_k|$$

where $k$ denotes the level in the pyramid, $V_k$, denotes the set of images to be evaluated at level $k$ and $M_k$ its cardinality. $m_{k,j}$ and $\sigma_{k,j}$ represent the mean and deviation of the energy for the image and $m_{k,Max}$ and $\sigma_{k,Max}$ identify the parameters for the image with the largest energy for level $k$ and $\rho_k$ represents a normalizing factor. From this formulation, those images having mean-value which falls within distribution of the image with the largest energy for level *k*, will be propagated to the next level.

The normalizing factor p determines the strictness of the criteria and its value should be characterized by the width of the distributions at the lowest level. Let $\sigma_{k,Max} = \max\{\sigma_{k,i}\}$ with $i$=1...$M_k$ then

$$\rho_k = 1 - \frac{1}{M_k} \cdot \min_{j=1..M} \left\{ \frac{\sigma_{k,j}}{\sigma_{k,Max}} \right\}$$

Then the set of images propagated are defined as

$$V_k = \{F_{k,j} \mid (m_{k,Max} - m_{k,j}) < \sigma_{k,Max} \cdot \rho_k, \forall\ j=1..M_{k-1}\}$$

where $F_{k,j}$ represents the cumulative energy for image j computed from the lowest level *N* up and including level *k*. The evaluation of the energy for selected images on the next level in the pyramid depends on the cardinality of $V_k$ and the level being processed. If the cardinality of $V_k$ equals one then the image selected is already the one with the least amount of blur. If the cardinality is greater than one and the level is the highest level, then the image having the maximum amount of energy is the one which has the least amount of blur. In any other case, the evaluation should proceed to the next level of the pyramid for those images that, under the above set construction conditions are not eliminated.

Returning to Figure 13, at step 1316, the process determines if only one active image remains. If so, this image is the output image and the multiplexer 1132 is conditioned by the processor 1110 to provide the one active image as the output signal OUT. If, at step 1316 more than one image is active then step 1320 is executed. Step 1320 determines if LV is the level of the highest resolution pyramid level. If so, then step 1322 is executed which outputs the image that has the greatest accumulated energy level. If, at step 1320, LV is determined not to be the highest resolution level of the pyramids, step 1324 is executed which increments the variable LV and returns control to step 1314.

The process described in Figure 13 analyzes the five images stored in the frame stores 1112 to 1120 to determine which of these images has the most detail at each of the pyramid levels and outputs that image. The frames stored in the memories 1112 through 1120 may be taken at a rate of 30 frames per second or at lower frame rates. Alternatively, the images stored in the frame stores 1112 through 1120 may be manually selected by a user, for example, pressing a shutter button, where the analysis of the captured images and selection of the image containing the least motion blur would be initiated, for example, by the user pressing and holding the shutter button down.

Figure 12 is an alternative apparatus which may be used to select a key video frame. The apparatus shown in Figure 12 has advantages over the apparatus disclosed in Figure 11 in that it includes only two frame store memories 1112' and 1114'. The apparatus shown in Figure 12 processes images sequentially, comparing a new image to a stored image. In this embodiment of the invention, when the new image exhibits less motion blur than the stored image the new image replaces the stored image and is then compares subsequently received images. In this alternative embodiment, the image remaining when the image capture process is complete is the image having the least motion blur of all of the images that were detected. The frame selection process that is used with the apparatus shown in Figure 12, is illustrated by the flowchart diagram shown in Figure 14.

The first step in this process, step 1410 is to store the first received image as the reference image. At Step 1412, a new image is received and the process aligns the new image to a reference image using either a parametric transformation or warping based on a flow field as described above. Once, the images are aligned, step 1412 also determines the common image areas. Step 1414 then generates Laplacian pyramids for the common areas in each of the reference image and the newly received image. Step 1416 then calculates energy values for all pyramid levels in both images and generates a measure of the energy level in each pyramid. This energy level may, for example, be a simple sum of the energy measures at each of the pyramid levels or it may be a weighted function of the energy at each level.

At step 1418, the process determines whether the shutter has been released. If so, step 1420 is executed which outputs the current reference image as the image having the best focus of any image processed since the shutter was depressed. If, at step 1418, the shutter has not been released, step 1422 is executed which determines if the energy level of the new image is greater than that of the reference image. If so, step 1424 is executed which replaces the reference image with the new image and control returns to step 1412. If, at step 1422, the energy of the new image was not greater than the energy of the reference image control returns to step 1412, without changing the reference image, to compare the next received image to the reference image.

The process shown in Figure 14 produces one image from a sequence of images which exhibits the least motion blur in common areas of all of the images which are processed. In an alternative embodiment of the invention, the Laplacian pyramids maybe formed of the entire image regardless of the common areas, and the images may be compared to determine which exhibits the least amount of motion blur. In this alternative embodiment, the image information may change as the camera is moved with respect to the scene. The output image that is produced, however, will be the output image which exhibits the least motion blur of all of the images that are captured while the shutter was depressed.

A fourth image processing technique concerns processing multiple images taken of a poorly illuminated scene to produce a single image which has greater brightness and contrast than any of the component images. Standard imaging sensors, such as CCD arrays, rely on the integration of the light incident on the sensor array at discrete positions of the sensor. Thus, given light that is incident on the sensor array with a function described by $f(x,y,t)$, the output pixel at each position in the sensor array can be described by the relationship

$$F_{sensor}(x,y,t) = \int_{u=t-I}^{t} f(x,y,u) \cdot du$$

where $I$ denotes the integration time for the sensor. It is assumed, for the sake of this discussion, that the function $F_{sensor}(x, y, t)$ is a discrete function of the variables $x$, $y$, and $t$, while the scene illumination function $f(x,y,t)$ is discrete with respect to the spatial variables $x$ and $y$, but continuous with respect to the time variable $t$. Although this is an oversimplified model for sensor arrays, it suffices for this discussion.

In conditions of low light, the integration time $I$ can be increased, thus enabling more light to be accumulated by each pixel in the sensor array. When $I$ is too large, however, blooming and saturation will occur. When $I$ is too small, the scene will appear overly dark.

Other modifications can be made to the imaging process to increase the amount of light incident on the sensor array. Adjusting the aperture size of the sensor, as an example, causes the amount of light incident on the sensor to be increased, thus increasing the magnitude of $f(x,y,t)$. There are, however, physical limitations in the optics which limit the amount by which the aperture can be opened.

When the sensor is moving relative to the scene being imaged, the motion occurring during the integration time I causes the pixel values to be integrated over different spatial areas in the scene. In other words, the scene function $f(x,y,t)$, when the sensor is moving, may be described as

$$F_{sensor}(x,y,t) = \int_{u=t-I}^{t} f(x(\mathrm{u}), y(\mathrm{u}), \mathrm{u}) \cdot d\mathrm{u}$$

where x(u) and y(u) represent the time-varying functions of position due to the motion of the relative motion of the sensor and the scene. This ultimately results in the motion blur effects that are commonly seen in video from moving cameras.

When the sensor is moving, and the scene contains relatively small amounts of light (i.e. at twilight or in times of low scene contrast), it is impossible to obtain a bright, high-contrast image of the scene without blurring. This is because the integration time $I$ can not be increased without causing blurring, and the amount of light integrated by each pixel value decreases proportionally with the integration time, thus causing the darkening of the scene as the integration time is decreased to compensate for the motion of the camera.

Rather than relying on the sensor to integrate light for each pixel, it is possible to perform this integration step through electronic processing. Suppose now, that an integration time $I$ is selected such that the motion blur in the scene is very small while the sensor is in motion. If the light levels are insufficient, then the resulting sensor image

$$F_{sensor}(x,y,t) = \int_{u=t-I}^{t} f(x,y,u) \cdot du$$

will be darker than is desired. To amplify the brightness and contrast of the scene, the frames from the sensor can be accumulated over time with a function such as

$$F'_{sensor}(x,y,t) = \sum_{u=t-N}^{t} F_{sensor}(x,y,u)\,.$$

The resulting enhanced image $F'_{sensor}\,(x,y,t)$ has an increased brightness given by the cardinality of $N$, which describes the number of prior frames that are used to accumulate the current frame's enhanced image results. When N is chosen to be a value of 10, for example, the resulting frame $F'_{sensor}\,(x,y,t)$ will have approximately 10 times the brightness of the raw frame $F_{sensor}\,(x,y,t)$.

For the summed images to properly reinforce each other, it is desirable to register the images before temporal accumulation of the $F_{sensor}\,(x,y,t)$ frames. In the exemplary embodiment of the invention, because the sensor is in motion during the integration interval required for $F'_{sensor}\,(x,y,t)$ accumulation, the video frames are registered such that pixels in the frames given for $F_{sensor}\,(x,y,t)$ within the interval $t$-$N$ to $t$ are in alignment to sub-pixel precision. Many methods are known in literature for determining sub-pixel precise image registration and warping, and these methods are described, for example, in a paper by M. W. Hansen et al. entitled "Real-time scene stabilization and mosaic construction," Proceedings of the Workshop on Applications of Computer Vision Sarasota, FL, 1994.

Figure 15 is a flowchart diagram which illustrates an exemplary method for extending the integration time of an image without subjecting the image to motion blur or blooming. The method shown in Figure 15 may be implemented using the processing hardware shown in Figure 12. The first step in the process shown in Figure 15, step 1510, stores the first image that is received as the reference image. Next, at step 1512, a local variable I is set to 1. The variable I is incremented from 1 to N to limit the number of images which are combined to form the merged image. Next at step 1514 a new image is obtained and is aligned to the reference image. At step 1516, the common portions of the aligned image are integrated into the reference image to form a new reference image, At step 1518, the process determines if I is greater than or equal to the maximum number of frames to be integrated, N, and, if so, at step 1520 outputs the integrated preference image. If, at step 1518, I is determined to be less than N, then at step 1522 I is incremented and control returns to 1514 to obtain a new image to align with and integrate into the reference image.

A fifth image processing technique relates to a signal processing method that uses multiple images taken of a scene to reduce the effects of optical-path perturbations such as may occur when the image is viewed through significant thermal or atmospheric variations. As set forth above, this type of distortion is referred to herein as scintillation distortion. Scintillation correction involves removing distortions that are due to optical path perturbations, such as atmospheric disturbances, from the viewed scene. Without scintillation correction, it is difficult to get a high-resolution representation of the scene.

The scintillation distortion can be approximated by a local, translational motion field that varies over time, denoted with $\vec{d}(x,\ y,\ t)$, where $x$ and $y$ denote the position of the flow vector in the video frame F($t$) and $t$ denotes the time instant of the frame acquisition.

It is possible to estimate the displacement field $\vec{d}(x,y,t)$ using a number of different methods, including any method that is generally applicable for optical flow computations. One method for computing this displacement flow is to solve for the displacement field in a least-squares sense, where the objective function is defined as searching for the displacement field $\vec{d}(x,y,t)$ that minimizes the error quantity E(t) given by

$$E(x,y,t) = \sum_{x,y\in W} \left(F(x,y,t) - F(x+\vec{d}_x(x,y,t),\, y+\vec{d}_y(x,y,t),\, t-1)\right)^2.$$

In this equation, the value $\vec{d}_x\,(x,\ y,\ t)$ denotes the horizontal component of the displacement field, $\vec{d}_y(x,y,t)$ denotes the vertical component of the displacement field, and $W$ denotes an integration window area that is local to the image position $(x,y)$.

The solution to this equation, given appropriate linear approximations, can be shown to be

$$\begin{bmatrix} \sum_{x,y\in W} F_x^2(x,y,t) & \sum_{x,y\in W} F_x(x,y,t)F_y(x,y,t) \\ \sum_{x,y\in W} F_x(x,y,t)F_y(x,y,t) & \sum_{x,y\in W} F_y^2(x,y,t) \end{bmatrix} \begin{bmatrix} \vec{d}_x(x,y,t) \\ \vec{d}_y(x,y,t) \end{bmatrix} = \begin{bmatrix} -\sum_{x,y\in W} F_x(x,y,t)F_t(x,y,t) \\ -\sum_{x,y\in W} F_y(x,y,t)F_t(x,y,t) \end{bmatrix}$$

where $F_x(x,y,t)$ is defined as the horizontal partial derivative of the frame F(t), $F_y(x,y,t)$ is the vertical partial derivative of the frame F(t), and $F_t(x,y,t)$ is the partial derivative of the frame sequence with respect to time, which can be approximated with the relationship

$$F_t(x,y,t) = F(x,y,t) - F(x,y,t-1).$$

The estimation of this flow field can then be refined, as required, through iterating this solution using hierarchical methods.

These displacement fields describe the distortion that occurs between two video frames. So, given F(t) and F(t-1), the displacement field $\vec{d}(x,y,t)$ describes the distortion between the two video frames. Thus, by computing the distortion fields over time and by cascading these displacement fields, it is possible to remove the distortions and generate a stable view with reduced scintillation distortion.

Although this method does remove distortion, it does not describe the distortion between any video frame and the true view of the scene with no distortion. To determine the scene contents with no distortion, a reference frame $F_{ref}$ that contains no distortion is estimated, the distortion fields between this reference and the current frame is calculated and then the current frame is warped with the inverse distortion field to effectively remove any scintillation distortion in the current frame.

Figure 16 is a flowchart diagram which illustrates the processing of a sequence of images to remove scintillation distortion from the images. The first step in the process, step 1610 stores the first image as the reference frame $F_{ref}$,, zeros the displacement field, and sets an incrementing variable, I, to one Step 1612 captures a new image and calculates the displacement field, $\vec{d}(x,y,t)$, of the new image with respect to the reference image. At step 1614 the displacement field calculated in step 1612 is added to the combined displacement field, DF (i.e. $\vec{d}_{ave}(x,y)$). At step 1616, the process determines if the incrementing variable I is greater than or equal to the maximum number of images to be processed, N. If so, step 1620 divides the combined displacement field DF by N (i.e. calculates

$$\vec{d}_{ave}(x,y) = \frac{1}{N}\sum_{t=1...N}\vec{d}(x,y,t))$$

Step 1622 then warps the reference image using the displacement field DF (i.e. $\vec{d}_{ave}(x,y)$. At step 1624 the warped reference image is provided as the output image.

If, however, at step 1616 the incrementing variable I was less than N then, at step 1618, 1 is incremented and control is returned to step 1612 to obtain and process the next image in the sequence.

The process shown in Figure 16 obtains and processes N images to average there displacement fields and thus remove any image motion which varies about a mean value in the sequence of images.

This process can be recast into a process that is causal, and that can be continuously estimated over time. This can be implemented by simply redefining the variables in the summation term above to sum prior video frames for a given reference rather than summing frames in the future, and cascading the computed flow fields. Likewise, the linear averaging of the flow field can be replaced with another estimation process, such as infinite impulse response (IIR) filters or more sophisticated estimation processes.

Figure 17 is a flowchart diagram of an alternative scintillation distortion remover which employs and infinite impulse response (IIR) type filter to calculate the average displacement field, $\vec{d}_{ave}(x,y)$. The first step in the process shown in Figure 17, step 1710 stores the first image as the reference image, zeros the average displacement field, DF, and sets the incrementing variable I to one. At step 1712, a new image is obtained and the displacement field of the new image with respect to the reference image is calculated. At step 1714, the calculated displacement field generated in step 1712 is added to the reference displacement field, DF. At step 1716, the process determines if the incrementing variable I is greater than or equal to two. If so, step 1718 divides each item in the reference displacement field, DF, by two. If, at step 1716, I is not greater than or equal to two or, after step 1718, step 1720 is executed which increments the variable I. At step 1722, the process determines if the incrementing variable I is greater than a maximum frame count, N. If so, step 1724 is executed which warps the reference image using the displacement field DF. At step 1726, the warped reference image is provided as the output image and control returns to step 1710 to obtain and process the next image in the image sequence. If, however, at step 1722, the incrementing variable I was not greater than or equal to the maximum number of frames control returns to step 1712 to obtain the next image. The process shown in Figure 17 may be used, for example, with a video camera having a high frame rate (e.g. 300 frames per second) in order to generate a standard rate video signal in which the individual images in the sequence are compensated for scintillation distortion.

The performance of this process depends on the observation that the instantaneous distortion field $\vec{d}(x,y,t)$ is a zero-mean process; that is,

$$\sum_{t=-\infty}^{\infty} \vec{d}(x,y,t) = 0 .$$

Experimentation with actual data indicates that scintillation distortion caused by atmospheric disturbances can indeed be approximated by a zero-mean distribution.

A characteristic of this method is the removal of the motion from moving objects in the scene. The processes outlined above, assume that all motion in the scene is random motion which produces scintillation distortion. To allow for motion in the scene being imaged, a maximum displacement magnitude for $\vec{d}(x,y,t)$ and $\vec{d}_{ave}(x,y)$ can be determined. When the distortion in a portion of the image is found to be larger than this maximum magnitude, then it can be assumed that the portion of the image is characterized by motion and no distortion correction will be performed for that area.

A sixth image processing technique concerns a method for enhancing the quality of the images in a video sequence where different parts of the images in the sequence exhibit distortion or noise. Traditionally, when portions of the image are out of focus, the sequence has been processed to sharpen individual image flames, for example by processing the frames through a aperture filter. The improvement in picture quality achieved by these steps, however, is usually limited. This addresses this problem in a way that allows dramatic improvements in image quality for sequences of images which exhibit varying levels of distortion.

In general terms, the approach is to enhance an image frame by 1) tracking corresponding features in adjacent frames, 2) selecting specific features (or combination of features) from the adjacent frames that are best for display, 3) displaying the features warped or shifted into the coordinate frame of the current image of the sequence.

Noise in imagery is one of the most significant reasons for poor image quality. Noise can be characterized in several ways. Examples include intensity-based noise, and spatial noise. When intensity-based noise occurs, the observed image can be modeled as a pristine image having intensities that are corrupted by an additive and/or multiplicative distribution noise signal. In some cases this noise is fairly uniformly distributed over the image, and in other cases the noise occurs in isolated places in the image. When spatial noise occurs, portions of features in the image may be shifted or distorted. An example of this second type of noise is line-tearing, where the vertical component of lines in the image are dislocated horizontally, causing the line to jitter over time.

This type of noise in a video sequence may be significantly attenuated using the techniques described above for generating single image frames. In the embodiments of the invention described below, images surrounding a selected image in the sequence are used to enhance the selected image and then the next image in the sequence is selected and the process is repeated for the newly selected image.

A first step in removing noise from the frames of an image sequence is to align the frames to the selected frame. Frame alignment may be accomplished using any of the methods described above or by other methods. Once the frames are aligned, noise may be reduced by using knowledge of the temporal characteristics of the noise to reduce the magnitude of the noise; by combining or selecting local information from each frame to produce an enhanced frame or by modifying of the processing that is performed in a local region depending on a local quality of alignment metric or depending upon the local spatial, temporal or spatiotemporal structure of the image.

An exemplary method for removing noise having a zero-mean intensity-based noise is to simply average the aligned frames. Typically a window of 9 frames offers sufficient temporal support to reduce noise significantly, but fewer or greater number of frames may be used. This method may be further refined to remove spatial noise, such as line tearing. In this case after the imagery has been aligned over time, a non-linear step is performed to detect those instants where a portion of a feature has been shifted or distorted by noise. An example of a non linear step is sorting of the intensities at a pixel location followed by the identification and rejection of intensities that are inconsistent with the other intensities. A specific example includes the rejection of the two brightest and the two darkest intensity values out of an aligned set of 11 intensities. The remaining intensities are then averaged or subject to a median filter operation to produce a final value for the pixel at the target location.

These methods may be selectively performed only on features recovered from the image (e.g. flat areas in the image), rather than on the intensities themselves. For example, features may be recovered using oriented filters, and noise removed separately on the filtered results using the methods described above. The results may then be combined to produce a single enhanced image.

The individual images may also be filtered using, for example, a quality of match metric, such as local correlation, to determine the effectiveness of the motion alignment before any correction is performed. If the quality of match metric indicates that poor alignment has been performed, then the frame or frames corresponding to the error can be removed from the enhancement processing. Ultimately, if there was no successful alignment at a region in a batch of frames, then the original image may be left untouched.

The methods described above perform image enhancement relative to a common coordinate system using a moving window, or a batch of frames. Other methods may be used, however, to align the imagery to a common coordinate system. An example includes a moving coordinate system whereby a data set with intermediate processing results represented in the coordinate frame of the previous frame is shifted to be in the coordinate system of the current frame of analysis. This method has the benefit of being more computationally efficient since the effects of previous motion analysis results are stored and used in the processing of the current frame. This method is described below with reference to Figure 20.

After alignment, there may be spatial artifacts in the image, for example, shimmering, whereby features appear to scintillate in the processed image. This artifact may be caused by slight errors in alignment that locally are small, but if viewed over large regions, produce a noticeable shimmering. This artifact can be removed by several methods. The first is to impose spatial constraints, and the second method is to impose temporal constraints. An example of a spatial constraint is to assume that objects are piecewise rigid over regions in the image. The regions can be fixed in size, or can be adaptive in size and shape. The flow field can be smoothed within the region, or a local parametric model can be fit to the region. Because any misalignment is distributed over the whole region, this operation significantly reduces shimmering in the image.

An example of a temporal constraint is to fit a temporal model to the flow field. For example, a simple model includes only acceleration, velocity and displacement terms. The model is fit to the spatiotemporal volume locally to a flow field having only these parameters, perhaps limited in magnitude. The resultant flow field at each frame follows the parametric model and, thus, shimmering is reduced. If a quality of alignment metric computed over all the frames, however, exhibits poor alignment, then the parametric model can be computed over fewer frames, resulting in a model with fewer parameters. In the limit, only translational flow in local frames may be computed.

An example of spatial noise as defined above is the inconsistency of color data with luminance data. For example a feature may have sharp intensity boundaries, but poorly defined color boundaries. A method of sharpening these color boundaries is to use the location of the intensity boundaries, as well as the location of the regions within the boundaries, in order to reduce color spill. This can be performed using several methods. First, the color data can be adaptively processed or filtered, depending on the results of processing the intensity image. A specific example is to perform edge detection on the intensity image, and to increase the gain of the color signal in those regions. A further example is simply to shift the color signal with respect to the intensity signal to achieve better alignment between the signals. This reduces spatial bias between the two signals. The alignment can be performed using alignment techniques that have been developed for aligning imagery from different sensors, for example as disclosed in a paper by P.J. Burt entitled "Pattern Selective Fusion of IR and Visible Images Using Pyramid Transforms," National Symposium on Sensor Fusion, 1992. A further example of processing is to impose constraints not at the boundaries of intensity regions, but within the boundaries of intensity regions. For example, compact regions can be detected in the intensity space and color information that is representative of that compact region can be sampled. The color information is then added to the compact region only. Compact regions can be detected using spatial analysis such as a split and merge algorithm, or morphological analysis.

The techniques described above may also be applied for other image processing tasks that improve the perceived quality of a sequence of images. For example, the overall focus, depth of field or contrast of an image sequence may be enhanced by processing each image in the sequence as described above with reference to Figures 9 through 17. Image stabilization may be accomplished by warping and averaging the sequence of images using a moving coordinate system defined by a restricted inter-frame displacement field. This displacement field may be calculated, for example, as a temporal average of the individual inter-frame displacement fields for the frames in the sequence.

These techniques may also be applied to de-interlace a video image. A problem with the conversion of video from one media to another is that the display rates and formats may be different. For example, in the conversion of VHS video to DVD, the input is interlaced while the output may be progressively scanned if viewed on a computer screen. The presentation of interlaced frames on a progressively scanned monitor results in imagery that appears very jagged since the fields that make up a frame of video are presented at the same time. There are several approaches for solving this problem. The first is simply to up-sample fields vertically such that frames are created . This, however, results in a converted image sequence having a lower apparent vertical resolution than the original interlaced sequence.. The second method is to remove the motion between fields by performing alignment using, for example, the alignment methods described above. This technique can provide enhanced image resolution even if the camera is static. In this case, successive fields contain information that is vertically shifted by 1 pixel in the coordinate system of the frame, or 1/2 pixel in the coordinate system of the field. Therefore, after alignment 1/2 pixel of vertical motion is added to the flow field and then the field is shifted or warped. A full frame is then created by interleaving one original field and the warped field.

Figure 18 is a flowchart diagram which illustrates a process for improving a sequence of frames which occur at a standard video rate. At step 1810, N input frames are stored in a memory. At step 1812, the central frame of the stored frames is selected as the reference frame. At step 1814, the process calculates the displacement field between the reference frame and each other one of the stored frames. Also at step 1814, each stored frame is warped to the reference frame using the respective displacement field. The warped frames are stored in a memory or memories separate from the stored input frames to preserve the stored input frames for later processing. At step 1816, features from each of the other frames are fused into the reference frame based on their relative salience to the reference frame. Exemplary fusion processes in accordance with the invention are described above with reference to Figures 9 and 10. At step 1818, the process outputs the fused frame. Next, at step 1820 the process shifts the stored frames by one frame and stores a new frame into the open frame memory. After step 1820, control returns to step 1812 to process the central frame of the new shifted frames as the next reference frame. Using the method shown in Figure 18, only the images in the image sequence are processed, and each image is processed in its own coordinate system. This preserves the motion and enhances the detail in each of the images to produce an enhanced video sequence.

Figure 19 is a flowchart diagram which illustrates an alternative version of the process show in Figure 18. The steps 1910, 1912, 1914, and 1920 are identical to the steps 1810, 1812, 1814, and 1820. In step 1916, the process shown in Figure 19 applies a median filter across a pixel position among all of the stored warped frames to choose a value for the pixel in the output image. In step 1918, the process outputs the median frame as the output image. Step 1918 can also comprise other embodiments of selection and combination. Alternative versions include sorting the pixel intensities, rejecting one or more of the largest or smallest intensities, averaging the remaining intensities, and providing the result as the output of the process. An alternative version performs the same process on pre-filtered images rather than on intensities. An example of a pre-filtered image is an oriented band-pass filtered image. An exemplary method for producing an oriented band-pass filtered image is described in a text by Jae Lim entitled Two-Dimensional Signal and Image Processing, 1990, published by Prentice-Hall, Englelwood Cliffs, NJ.

The techniques shown in Figures 18 and 19 stored and processed N video frames to produce a single output frame. Figure 20 is a flowchart diagram which illustrates an alternative process in which only two image frames are stored. The first step in this process, step 2010 stores a first received image as the reference image. At step 2012, a new image is received and the stored reference image is warped to the coordinate system of the new image. At step 2014, the new image is fused into the warped reference image based on the relative saliency of areas in the two images. At step 2016, the fused image is output as the next image in the sequence and control returns to step 2012 to receive the next image in the sequence. The process illustrated by the flowchart in Figure 20 operates as an infinite impulse response filter and maybe used to reduce noise in an image or to compensate for momentary lapses in focus or momentary de-saturation of colors in the image caused by changes in illumination. In any of the techniques described with reference to Figures 18, 19 and 20, the saliency function may be related to the sharpness of the image with increasing integration removing noise and eliminating out of focus portions of the image. The saliency function, however, may also be the saturation of colors in the image with the more salient image portions having saturation near the midpoint between saturation and de-saturation. When this last saliency function is used, the process may be used to reduce blooming in the image sequence.

Figure 21 is a flowchart diagram which illustrates a process by which the chrominance image components may be spatially aligned to the luminance component. The method shown in Figure 21 may be used to process images, such as those reproduced from VHS or 8-mm video tape, to improve the correspondence between the luminance and chrominance components of an individual image. In addition, the signal bandwidth for the color difference components (e.g. U and V) of standard definition television images is much less than the bandwidth of the luminance component (Y). This results in color bleeding across the luminance boundary. This distortion is particularly noticeable in scenes which contain a colored object against a white or black background. The process shown in Figure 21 addresses this problem by warping the chrominance images into the luminance image.

At step 2110, the process calculates separate edge maps for the luminance and the U and V color difference images. As set forth above, the chrominance components represent color and saturation, neither one of which corresponds well to image detail in the luminance image. Because the color bleeding distortion is most noticeable in areas of the image where a colored object is displayed on a white or black background, conventional edge detection on both the chrominance and luminance images using edge thresholds that are appropriately defined for the relative bandwidths of the signals, produces an acceptable set of edge maps. Alternatively, a single edge map may be derived from a combination of the U and V color difference images based, for example, on color. In many images, objects have uniform colors which vary in saturation with the illumination of the objects. If the chrominance edge map were based on color then, at least for these objects, the chrominance edge map should correspond to the luminance edge map.

Returning to Figure 21, At step 2112, the process calculates displacement fields from the U and V edge maps to the luminance edge map. At step 2114, the U and V images are warped to the luminance image based on the calculated displacement field from the edge maps. Because the chrominance images may be assumed to be at least roughly aligned with the luminance images, this process may be modified so that it does not introduce undue distortion by limiting the magnitude of any displacement in a displacement field. If a displacement value greater than this threshold magnitude is calculated, it may be either set to zero or limited at a maximum value.

This disclosure describes numerous methods for performing electronic image enhancement. These methods are all capable of extending the performance of any sensor, by extending the sensor's dynamic range, depth of field, and integration time. In addition, two other methods were described. The first one enables digital still cameras to automatically select video frames opportunistically to maximize the quality of the acquired image, for a moving sensor, while the second one allowed the correction of distortion effects.

While the invention has been described in terms of exemplary embodiments, it is contemplated that it may be practiced as described above within the scope of the appended claims.

## Claims

**1.** A method for combining a plurality of colour images (A, B) of a scene to provide an enhanced color image of the scene comprising the steps of:

receiving the plurality of the color images (A, B) as separate luminance and chrominance image data;
filtering (814, 816, 912, 1012) the luminance image data representing the plurality of images to produce a respective plurality of luminance pyramids (LA, LB), each luminance pyramid having a low-resolution level and a plurality of higher resolution levels;
filtering (814, 816, 914, 1014) the chrominance image data representing the plurality of images to produce a respective plurality of chrominance pyramids, each chrominance pyramid having a low-resolution level and a plurality of higher resolution levels;
additionally generating (820, 818, 916, 1016) for each image (A, B) at least one salience pyramid (σ(LA) σ (LB) indicating the saliences of features of the image, each salience pyramid being a function (σ) of a space-scale representation of the image;
combining (830, 918, 1018) features of the luminance pyramids and of the chrominance pyramids, of the images to be combined at all pyramid levels except the low resolution level, in accordance with a mapping function which is a function (δ) of the salience pyramids of the images to be combined to generate a single fused luminance partial pyramid (Lc) and a single fused chrominance partial pyramid;
processing (920, 1020) the low-resolution levels of the plurality of luminance pyramids to generate one fused luminance low-resolution level;
processing (922, 1020) the low-resolution levels of the plurality of chrominance pyramids to generate one fused chrominance low-resolution level;
combining (830,924,1022) the fused luminance low-resolution level with the fused luminance partial pyramid to form a fused luminance pyramid and combining the fused chrominance low-resolution level with the fused chrominance partial pyramid to form a fused chrominance pyramid; and
reconstructing (832, 924, 1022) enhanced luminance and chrominance images from the respective fused luminance and chrominance pyramids and combining the enhanced luminance and chrominance images to form the enhanced image of the scene.

**2.** A method according to claim 1, wherein the said processing of the low-levels of the luminance pyramids and/or the said processing of the low-levels of the chrominance pyramids is different to the processing of the higher resolution levels.

**3.** A method according to claim 1, wherein each salience pyramid is a function (σ) of a luminance pyramid of the image.

**4.** A method according to claim 3, wherein the enhanced color image has enhanced depth of field relative to any of the plurality of color images, wherein:

the step (912) of filtering the luminance image data representing the plurality of images produces a respective plurality of Laplacian pyramids, each Laplacian pyramid having a Gaussian-filtered low-resolution level and a plurality of Laplacian-filtered higher resolution levels;
the step (914) of filtering the chrominance image data representing the plurality of images produces a respective plurality of Gaussian pyramids, each Gaussian pyramid having a Gaussian-filtered low-resolution level and a plurality of Gaussian-filtered high resolution levels;
the generating step (916) generates each salience pyramid as a function of a said Laplacian luminance pyramids;
the combining step (918) combines features of the Laplacian-filtered higher resolution levels of the images in accordance with a maximum magnitude function to generate the luminance partial pyramid and the chrominance partial pyramid;
the step (920) of processing the low-resolution levels of the luminance pyramids includes applying a maximum magnitude function to respective values of the low-resolution level to form the fused luminance low-resolution level; and
the step (922) of processing the low-resolution levels of the chrominance pyramids includes averaging respective values of the low-resolution level to form the fused chrominance low-resolution level.

**5.** A method according to claim 3, wherein the enhanced color image has enhanced dynamic range relative to any of the plurality of color images, wherein:

the step (1012) of filtering the luminance data representing the plurality of images produces a respective plurality of Laplacian pyramids, each Laplacian pyramid having a Gaussian-filtered low-resolution level and a plurality of Laplacian-filtered higher resolution levels;
the step (1014) of filtering the chrominance image data representing the plurality of images produces a respective plurality of Gaussian pyramids, each Gaussian pyramid having a Gaussian filtered low-resolution level and a plurality of Gaussian filtered higher resolution levels;
the generating step (1016) generates each salience pyramid as a function of a said Laplacian luminance pyramid;
the combining step (1018) combines the combining step (918) combines features of the Laplacian-filtered higher resolution levels of the images in accordance with a maximum magnitude function to generate the luminance partial pyramid and the chrominance partial pyramid;
the step (1020) of processing the low-resolution levels of the chrominance pyramids includes the steps of generating a median mask having a plurality of locations corresponding to a respective plurality of locations in each of the chrominance low-resolution levels, each location of the median mask corresponding to a respective value in one of the plurality of chrominance low-resolution levels, which value is a median of all respective values in the chrominance low-resolution levels at the location; and
fusing the plurality of chrominance low-resolution levels in accordance with the median mask; and
the step of processing the low-resolution levels of the luminance pyramids includes the step of fusing the plurality of luminance low-resolution levels in accordance with the median mask.

**6.** A carrier including a computer program which, when run on a computer, processes a plurality of color images of a scene in accordance with the method of one of claims 1 to 5.

**7.** A computer program which, when run on a computer, processes a plurality of color images of a scene in accordance with the method of one of claims 1 to 5.

**8.** Apparatus for processing a plurality of color images of a scene to provide an enhanced color image of the scene comprising:

a source of color images as separate luminance and chrominance image data;
means arranged to process the luminance image data representing the plurality of images to produce a respective plurality of luminance pyramids, each luminance pyramid having a low-resolution level and a plurality of higher resolution levels;
means arranged to process the chrominance image data representing the plurality of images to produce a respective plurality of chrominance pyramids, each chrominance pyramid having a low-resolution level and a plurality higher resolution levels;
means arranged to additionally generate (820, 818, 916, 1016) for each image (A, B) at least one salience pyramid ($\sigma$(LA) $\sigma$(LB)) indicating the saliences of features of the image, each salience pyramid being a function (σ) of a space-scale representation of the image;
means arranged to combine (830, 918, 1018) features of the luminance pyramids and of the chrominance pyramids, of the images to be combined at all pyramid levels except the low resolution level, in accordance with a mapping function which is a function (δ) of the salience pyramids of the images to be combined to generate a single fused luminance partial pyramid (LC) and a single fused chrominance partial pyramid;
means which process the low resolution levels of the plurality of luminance pyramids to generate one fused luminance low-resolution level;
means which process the low resolution levels of the plurality of chrominance pyramids to generate one fused chrominance low-resolution level;
means which combine the fused luminance low-resolution level with the fused luminance partial pyramid to form a fused luminance pyramid and combine the fused chrominance low-resolution level with the chrominance partial pyramid to form a fused chrominance pyramid; and
means which reconstructs enhanced luminance and chrominance images from the respective fused luminance and chrominance pyramids and combines the enhanced luminance and chrominance images to form the enhanced image of the scene.

**9.** Apparatus according to claim 8, wherein each salience pyramid is a function (σ) of a luminance pyramid of the image.

## Patentansprüche

**1.** Verfahren für das Kombinieren einer Mehrzahl von Farbbildern (A, B) einer Szene, um ein verbessertes Farbbild der Szene zur Verfügung zu stellen, das die Schritte aufweist:

Empfangen der Mehrzahl der Farbbilder (A, B) als getrennte Helligkeits- und Farbtonbilddaten,
Filtern (814, 816, 912, 1012) der Helligkeitsbilddaten, die die Mehrzahl von Bildern darstellen, um eine entsprechende Mehrzahl von Helligkeitspyramiden (LA, LB) zu erzeugen, wobei jede Helligkeitspyramide eine Ebene niedriger Auflösung und eine Mehrzahl von Ebenen höherer Auflösung hat,
Filtern (814, 816, 914, 1014) der Farbtonbilddaten, die die Mehrzahl von Bildern darstellen, um eine entsprechende Mehrzahl von Farbtonpyramiden zu erzeugen, wobei jede Farbtonpyramide eine Ebene niedriger Auflösung und eine Mehrzahl von Ebenen höherer Auflösung hat,
zusätzliches Erzeugen (820, 818, 916, 1016) von zumindest einer Ausprägungspyramide (σ(LA) σ(LB)) für jedes Bild (A, B), die die Vorsprünge bzw. Ausprägungen von Merkmalen des Bildes anzeigt, wobei jede Ausprägungspyramide eine Funktion (σ) einer raumskalierten Darstellung des Bildes ist,
Kombinieren (830, 918, 1018) der Merkmale der Helligkeitspyramiden und der Farbtonpyramiden der zu kombinierenden Bilder auf allen Pyramidenebenen außer der Ebene niedriger Auflösung in Übereinstimmung mit einer Bildungsfunktion, die eine Funktion (δ) der Ausprägungspyramiden der zu kombinierenden Bilder ist, um eine einzelne verschmolzene Helligkeitsteilpyramide (Lc) und eine einzelne verschmolzene Farbtonteilpyramide zu erzeugen,
Verarbeiten (920, 1020) der Ebenen niedrigen Niveaus der Mehrzahl von Helligkeitspyramiden, um eine verschmolzene Helligkeitsebene niedriger Auflösung zu erzeugen,
Verarbeiten (922, 1020) der Ebenen niedriger Auflösung der Mehrzahl von Farbtonpyramiden, um eine verschmolzene Farbtonebene niedriger Auflösung zu erzeugen,
Kombinieren (830, 924, 1022) der verschmolzenen Helligkeitsebene niedriger Auflösung mit der verschmolzenen Helligkeitsteilpyramide, um eine verschmolzene Helligkeitspyramide zu bilden, und Kombinieren der verschmolzenen Farbtonebene niedriger Auflösung mit der verschmolzenen Farbtonteilpyramide, um eine verschmolzene Farbtonpyramide zu bilden, und
Wiederherstellen (832, 924, 1022) von verbesserten Helligkeits- und Farbtonbildern aus den jeweiligen verschmolzenen Helligkeits- und Farbtonpyramiden und Kombinieren der verbesserten Helligkeits- und Farbtonbilder, um das verbesserte Bild des Szene zu bilden.

**2.** Verfahren nach Anspruch 1, wobei sich die Verarbeitung der niedrigen Ebenen der Helligkeitspyramiden und/oder die Verarbeitung der niedrigen Ebenen der Farbtonpyramiden von der Verarbeitung der Ebenen höherer Auflösung unterscheidet.

**3.** Verfahren nach Anspruch 1, wobei jede Ausprägungspyramide eine Funktion (σ) einer Helligkeitspyramide des Bildes ist.

4. Verfahren nach Anspruch 3, wobei das verbesserte Farbbild eine verbesserte Feldtiefe relativ zu irgendeinem der Mehrzahl von Farbbildern hat, wobei:

der Schritt (912) des Filterns der Helligkeitsbilddaten, die die Mehrzahl von Bildern darstellen, eine entsprechende Mehrzahl von Laplace-Pyramiden erzeugt, wobei jede Laplace-Pyramide eine gaußgefilterte Ebene niedriger Auflösung und eine Mehrzahl von laplacegefilterten Ebenen höherer Auflösung hat,
der Schritt (914) des Filterns der Farbtonbilddaten, die die Mehrzahl von Bildern darstellen, eine entsprechende Mehrzahl von Gauß-Pyramiden erzeugt, wobei jede Gauß-Pyramide eine gaußgefilterte Ebene niedriger Auflösung und eine Mehrzahl von gaußgefilterten Ebenen höherer Auflösung hat,
der Erzeugungsschritt (916) jede Ausprägungspyramide als eine Funktion einer Laplace-Helligkeitspyramide erzeugt,
der Kombinationsschritt (918) die Merkmale der laplacegefilterten Ebenen höherer Auflösung von den Bildern kombiniert in Übereinstimmung mit einer maximalen Größenfunktion, um die Helligkeitsteilpyramide und die Farbtonteilpyramide zu erzeugen,
der Schritt (920) der Verarbeitung der Ebenen niedriger Auflösung der Helligkeitspyramiden das Anlegen einer Maximalgrößenfunktion auf entsprechende Werte der Ebene niedriger Auflösung beinhaltet, um die verschmolzene Helligkeitsebene niedriger Auflösung zu bilden, und
der Schritt (922) der Verarbeitung der Niveaus niedriger Auflösung der Farbtonpyramiden das Mitteln entsprechender Werte der Ebenen niedriger Auflösung beinhaltet, um die verschmolzene Farbtonebene niedriger Auflösung zu bilden.

5. Verfahren nach Anspruch 3, wobei das verbesserte Farbbild einen verbesserten dynamischen Bereich relativ zu irgendeinem der Mehrzahl von Farbbildern hat, wobei:

der Schritt (1012) des Filterns der Helligkeitsdaten, die die Mehrzahl von Bildern darstellen, eine entsprechende Mehrzahl von Laplace-Pyramiden erzeugt, wobei jede Laplace-Pyramide eine gaußgefilterte Ebene niedriger Auflösung und eine Mehrzahl von laplacegefilterten Ebenen höherer Auflösung hat,
der Schritt (1014) des Filterns der Farbtonbilddaten, die die Mehrzahl von Bildern darstellen, eine entsprechende Mehrzahl von Gauß-Pyramiden erzeugt, wobei jede Gauß-Pyramide eine gaußgefilterte Ebene niedriger Auflösung und eine Mehrzahl von gaußgefilterten Ebenen höherer Auflösung hat,
der Erzeugungsschritt (1016) jeder Ausprägungspyramide als eine Funktion einer Laplace-Helligkeitspyramide erzeugt,
der Kombinationsschritt (1018) die Merkmale der laplacegefilterten Ebenen höherer Auflösung der Bilder in Übereinstimmung mit einer Maximalgrößenfunktion kombiniert, um die Helligkeitsteilpyramide und die Farbtonteilpyramide zu erzeugen,
der Schritt (1020) der Verarbeitung der Ebenen niedriger Auflösung der Farbtonpyramiden die Schritte aufweist:

Erzeugen einer Mittelmaske mit einer Mehrzahl von Orten, die einer entsprechenden Mehrzahl von Orten in jeder der Farbtonebenen niedriger Auflösung entsprechen, wobei jeder Ort der Mittelmaske einen entsprechenden Wert in einer der Mehrzahl von Farbtonebenen niedriger Auflösung entspricht, dessen Wert ein Mittelwert von allen entsprechenden Werten in den Farbtonebenen niedriger Auflösung an dem Ort ist, und
Verschmelzen der Mehrzahl von Farbtonebenen niedriger Auflösung in Übereinstimmung mit der Mittelmaske, und
den Schritt des Verarbeitens der Ebenen niedriger Auflösung der Helligkeitspyramiden den Schritt des Verschmelzens der Mehrzahl von Helligkeitsebenen niedriger Auflösung in Übereinstimmung mit der Mittelmaske beinhaltet.

6. Datenträger, der ein Computerprogramm beinhaltet, das, wenn es auf einem Computer ausgeführt wird, eine Mehrzahl von Farbbildern einer Szene in Übereinstimmung mit dem Verfahren nach einem der Ansprüche 1 bis 5 verarbeitet.

7. Computerprogramm, das, wenn es auf einem Computer abläuft, eine Mehrzahl von Farbbildern einer Szene in Übereinstimmung mit dem Verfahren nach einem der Ansprüche 1 bis 5 verarbeitet.

8. Vorrichtung für die Verarbeitung einer Mehrzahl von Farbbildern einer Szene, um ein verbessertes Farbbild der Szene zur Verfügung zu stellen, die aufweist:

eine Quelle von Farbbildern als getrennte Helligkeits- und Farbtonbilddaten,
eine Einrichtung, die derart angeordnet ist, daß sie die Helligkeitsbilddaten, die die Mehrzahl von Bildern darstellen, verarbeitet, um eine entsprechende Mehrzahl von Helligkeitspyramiden zu erzeugen, wobei jede Helligkeitspyramide eine Ebene niedriger Auflösung und eine Mehrzahl von Ebenen höherer Auflösung hat,
Einrichtungen, die dafür ausgelegt sind, die Farbtonbilddaten, die die Mehrzahl von Bildern darstellen, zu verarbeiten, um eine entsprechende Mehrzahl von Farbtonpyramiden zu erzeugen, wobei jede Farbtonpyramide eine Ebene niedriger Auflösung und eine Mehrzahl von Ebenen höherer Auflösung hat,
eine Einrichtung, die derart ausgelegt ist, daß sie zusätzlich für jedes Bild (A, B) zumindest eine Ausprägungspyramide (σ(LA) σ(LB)) zusätzlich erzeugt (820, 818, 916, 1016), die die Ausprägungen bzw. Hervorhebungen von Merkmalen des Bildes anzeigt, wobei jede Ausprägungspyramide eine Funktion (σ) einer raumskalierten Darstellung des Bildes ist,
eine Einrichtung, die dafür ausgelegt ist, Merkmale der Helligkeitspyramiden und der Farbtonpyramiden der zu kombinierenden Bilder auf allen Ebenen der Pyramiden außer der Ebene niedriger Auflösung zu kombinieren (830, 918, 1018), in Übereinstimmung mit einer Abbildungsfunktion, die eine Funktion (δ) der Ausprägungspyramiden der zu kombinierenden Bilder ist, um eine einzelne verschmolzene Helligkeitsteilpyramide (LC) und eine einzelne verschmolzene Farbtonteilpyramide zu erzeugen,
eine Einrichtung, die die Ebenen niedriger Auflösung der Mehrzahl von Helligkeitspyramiden verarbeitet, um eine verschmolzene Helligkeitsebene niedriger Auflösung zu erzeugen,
eine Einrichtung, die die Ebenen niedriger Auflösung der Mehrzahl von Farbtonpyramiden verarbeitet, um eine verschmolzene Farbtonebene niedriger Auflösung zu erzeugen,
eine Einrichtung, die die verschmolzene Helligkeitsebene niedriger Auflösung mit der verschmolzenen Helligkeitsteilpyramide kombiniert, um eine verschmolzene Helligkeitspyramide zu erzeugen, und die verschmolzene Farbtonebene niedriger Auflösung mit der Farbtonteilpyramide kombiniert, um eine verschmolzene Farbtonpyramide zu erzeugen, und
eine Einrichtung, die verbesserte Helligkeits- und Farbtonbilder aus den jeweiligen verschmolzenen Helligkeits- und Farbtonpyramiden rekonstruiert und die verbesserten Helligkeits- und Farbtonbilder kombiniert, um das verbesserte Bild der Szene zu bilden.

**9.** Vorrichtung nach Anspruch 8, wobei jede Ausprägungspyramide eine Funktion (σ) einer Helligkeitspyramide des Bildes ist.

## Revendications

**1.** Procédé pour combiner une pluralité d'images en couleurs (A, B) d'une scène afin d'obtenir une image en couleurs améliorée de la scène, comprenant les étapes de :

réception de la pluralité d'images en couleurs (A, B) sous la forme de données d'image séparées de luminance et de chrominance ;
filtrage (814, 816, 912, 1012) des données d'image de luminance représentant la pluralité d'images pour produire une pluralité respective de pyramides de luminance (LA, LB), chaque pyramide de luminance ayant un niveau de faible définition et une pluralité de niveaux de définition supérieure ;
filtrage (814, 816, 914, 1014) des données d'image de chrominance représentant la pluralité d'images pour produire une pluralité respective de pyramides de chrominance, chaque pyramide de chrominance ayant un niveau de faible définition et une pluralité de niveaux de définition supérieure ;
génération supplémentaire (820, 818, 916, 1016) pour chaque image (A, B) d'au moins une pyramide de proéminence (σ (LA) σ (LB)) indiquant les proéminences de caractéristiques de l'image, chaque pyramide de proéminence étant une fonction (σ) de la représentation de l'image à l'échelle spatiale ;
combinaison (830, 918, 1018) de caractéristiques des pyramides de luminance et des pyramides de chrominance, des images à combiner à tous les niveaux de pyramide à l'exception du niveau de faible définition, en fonction d'une fonction de mappage qui est une fonction (δ) des pyramides de proéminence des images à combiner pour générer une seule pyramide (LC) partielle de luminance fusionnée et une seule pyramide partielle de chrominance fusionnée ;
traitement (920, 1020) des niveaux de faible définition de la pluralité de pyramides de luminance pour générer un niveau de faible définition de luminance fusionnée ;
traitement (922, 1020) des niveaux de faible définition de la pluralité de pyramides de chrominance pour générer un niveau de faible définition de chrominance fusionnée ;
combinaison (830, 924, 1022) du niveau de faible définition de luminance fusionnée avec la pyramide partielle de luminance fusionnée pour former une pyramide de luminance fusionnée et combinaison du niveau de faible définition de chrominance fusionnée avec la pyramide partielle de chrominance fusionnée pour former une pyramide de chrominance fusionnée ; et
reconstitution (832, 924, 1022) d'images améliorées de luminance et de chrominance à partir des pyramides respectives de luminance et de chrominance fusionnées et combinaison des images améliorées de luminance et de chrominance pour former l'image améliorée de la scène.

**2.** Procédé selon la revendication 1, dans lequel ledit traitement des faibles niveaux des pyramides de luminance et/ou ledit traitement des faibles niveaux des pyramides de chrominance sont/est différent(s) du traitement des niveaux de définition supérieure.

**3.** Procédé selon la revendication 1, dans lequel chaque pyramide de proéminence est une fonction ($\sigma$) de la pyramide de luminance de l'image.

**4.** Procédé selon la revendication 3, dans lequel l'image en couleurs améliorée a une meilleure profondeur de champ par rapport à l'une quelconque de la pluralité d'images en couleurs, dans lequel :

l'étape (912) de filtrage des données d'image de luminance représentant la pluralité d'images produit une pluralité respective de pyramides laplaciennes, chaque pyramide laplacienne ayant un niveau de faible définition filtré gaussien et une pluralité de niveaux de définition supérieure filtrés laplaciens ;
l'étape (914) de filtrage des données d'image de chrominance représentant la pluralité d'images produit une pluralité respective de pyramides gaussiennes, chaque pyramide gaussienne ayant un niveau de faible définition filtré gaussien et une pluralité de niveaux de définition élevée fitrés gaussiens ;
l'étape de génération (916) génère chaque pyramide de proéminence en fonction de l'une desdites pyramides de luminance laplaciennes ;
l'étape de combinaison (918) combine des caractéristiques des niveaux de définition supérieure filtrés laplaciens des images en fonction d'une fonction d'amplitude maximum pour générer la pyramide partielle de luminance et la pyramide partielle de chrominance ;
l'étape (920) de traitement des niveaux de faible définition des pyramides de luminance comporte l'application d'une fonction d'amplitude maximum à des valeurs respectives du niveau de faible définition pour former le niveau de faible définition de luminance fusionnée ; et
l'étape (922) de traitement des niveaux de faible définition des pyramides de chrominance comporte la réalisation de la moyenne de valeurs respectives du niveau de faible définition pour former le niveau de faible définition de chrominance fusionné.

**5.** Procédé selon la revendication 3, dans lequel l'image en couleurs améliorée a une plage dynamique améliorée par rapport à l'une quelconque de la pluralité d'images en couleurs, dans lequel :

l'étape (1012) de filtrage des données de luminance représentant la pluralité d'images produit une pluralité respective de pyramides laplaciennes, chaque pyramide laplacienne ayant un niveau de faible définition filtré gaussien et une pluralité de niveaux de définition supérieurs filtrés laplaciens ;
l'étape (1014) de filtrage des données d'image de chrominance représentant la pluralité d'images produit une pluralité respective de pyramides gaussiennes, chaque pyramide gaussienne ayant un niveau de faible définition filtré gaussien et une pluralité de niveaux de définition supérieurs filtrés gaussiens ;
l'étape de génération (1016) génère chaque pyramide de proéminence en fonction d'une dite pyramide de luminance laplacienne ;
l'étape de combinaison (1018) combine des caractéristiques des niveaux de définition supérieure filtrés laplaciens des images en fonction d'une fonction d'amplitude maximum pour générer la pyramide partielle de luminance et la pyramide partielle de chrominance ;
l'étape (1020) de traitement des niveaux de faible définition des pyramides de chrominance comporte les étapes de :

génération d'un masque médian ayant une pluralité d'emplacements correspondant à une pluralité respective d'emplacements dans chacun des niveaux de faible définition de chrominance, chaque emplacement du masque médian correspondant à une valeur respective dans l'un de la pluralité de niveaux de faible définition de chrominance, cette valeur étant une moyenne de toutes les valeurs respectives dans les niveaux de faible définition de chrominance à l'emplacement ; et
fusion de la pluralité de niveaux de faible définition de chrominance en fonction du masque médian ; et

l'étape de traitement des niveaux de faible définition des pyramides de luminance comporte l'étape de fusion de la pluralité de niveaux de faible définition de luminance en fonction du masque médian.

**6.** Support comportant un programme d'ordinateur qui, lorsqu'il est mis en oeuvre sur un ordinateur, traite une pluralité d'images en couleurs d'une scène selon le procédé de l'une des revendications 1 à 5.

**7.** Programme d'ordinateur qui, lorsqu'il est mis en oeuvre sur un ordinateur, traite une pluralité d'images en couleurs d'une scène selon le procédé de l'une des revendications 1 à 5.

**8.** Appareil pour traiter une pluralité d'images en couleurs d'une scène pour obtenir une image en couleurs améliorée de la scène, comprenant :

une source d'images en couleurs sous la forme de données d'image séparées de luminance et de chrominance ;
un moyen agencé pour traiter les données d'image de luminance représentant la pluralité d'images pour produire une pluralité respective de pyramides de luminance, chaque pyramide de luminance ayant un niveau de faible définition et une pluralité de niveaux de définition supérieure ;
un moyen agencé pour traiter les données d'image de chrominance représentant la pluralité d'images pour produire une pluralité respective de pyramides de chrominance, chaque pyramide de chrominance ayant un niveau de faible définition et une pluralité de niveaux de définition supérieure ;
un moyen agencé pour générer (820, 818, 916, 1016) de manière supplémentaire pour chaque image (A, B) au moins une pyramide de proéminence (σ (LA) σ (LB)) indiquant les proéminences de caractéristiques de l'image, chaque pyramide de proéminence étant une fonction (σ) de la représentation de l'image à l'échelle spatiale ;
un moyen agencé pour combiner (830, 918, 1018) des caractéristiques des pyramides de luminance et des pyramides de chrominance, des images à combiner à tous les niveaux de pyramide, à l'exception du niveau de faible définition, en fonction d'une fonction de mappage qui est une fonction (δ) des pyramides de proéminence des images à combiner pour générer une seule pyramide (LC) partielle de luminance fusionnée et une seule pyramide partielle de chrominance fusionnée ;
un moyen qui traite les niveaux de faible définition de la pluralité de pyramides de luminance pour générer un niveau de faible définition de luminance fusionnée ;
un moyen qui traite les niveaux de faible définition de la pluralité de pyramides de chrominance pour générer un niveau de faible définition de chrominance fusionnée ;
un moyen qui combine le niveau de faible définition de luminance fusionnée avec la pyramide partielle de luminance fusionnée pour former une pyramide de luminance fusionnée et qui combine le niveau de faible définition de chrominance fusionnée avec la pyramide partielle de chrominance fusionnée pour former une pyramide de chrominance fusionnée ; et
un moyen qui reconstitue des images améliorées de luminance et de chrominance à partir des pyramides respectives de luminance et de chrominance fusionnées et qui combine les images améliorées de luminance et de chrominance pour former l'image améliorée de la scène.

**9.** Appareil selon la revendication 8, dans lequel chaque pyramide de proéminence est une fonction (σ) d'une pyramide de luminance de l'image.

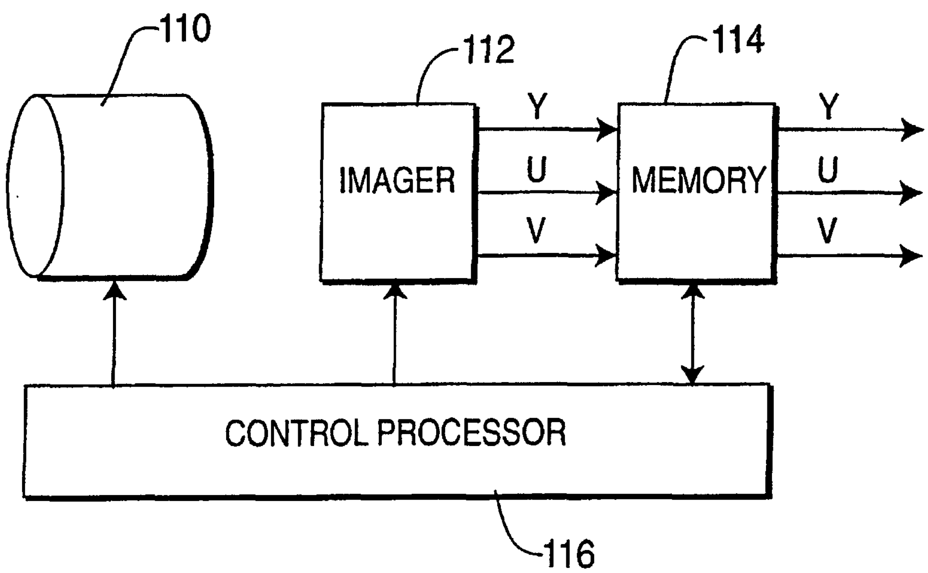


*FIG. 1*
**PRIOR ART**

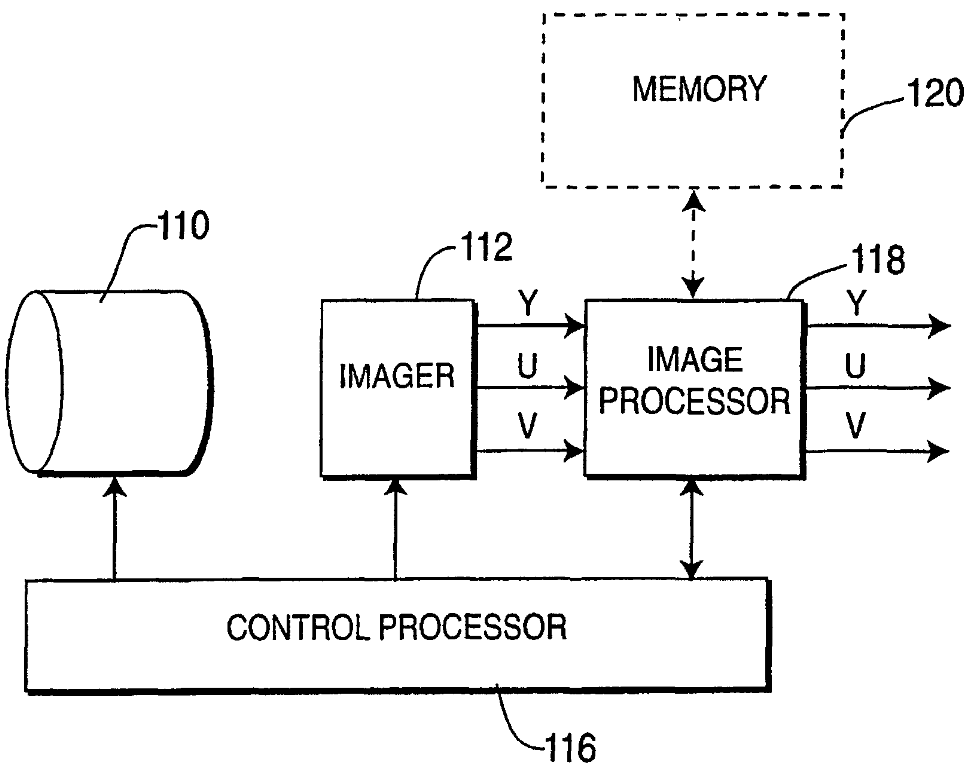


*FIG. 2*

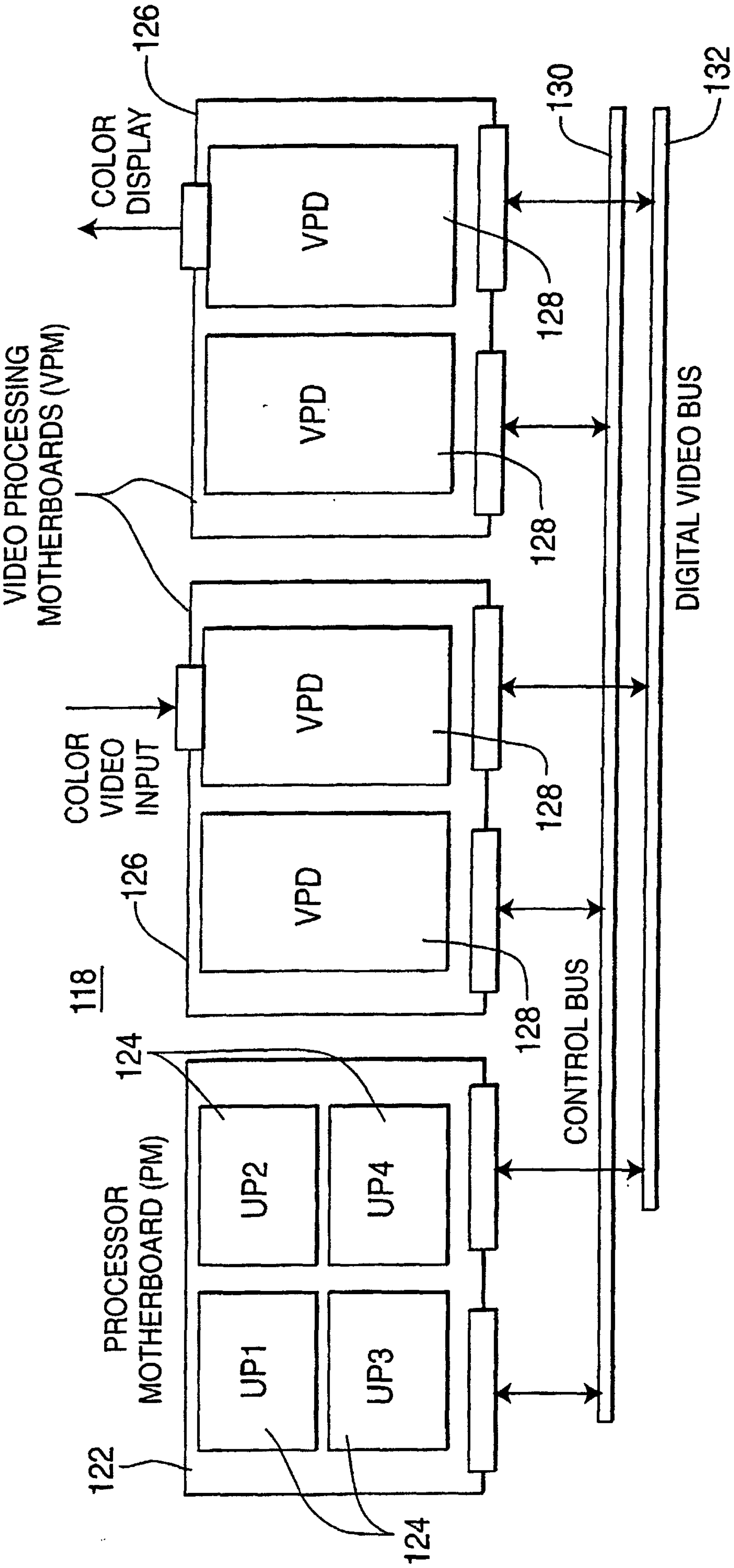
118
PROCESSOR MOTHERBOARD (PM)
122
124
UP1
UP2
UP3
UP4
124
VIDEO PROCESSING MOTHERBOARDS (VPM)
126
COLOR VIDEO INPUT
COLOR DISPLAY
126
VPD
VPD
VPD
VPD
128
128
128
128
130
132
CONTROL BUS
DIGITAL VIDEO BUS

FIG. 3

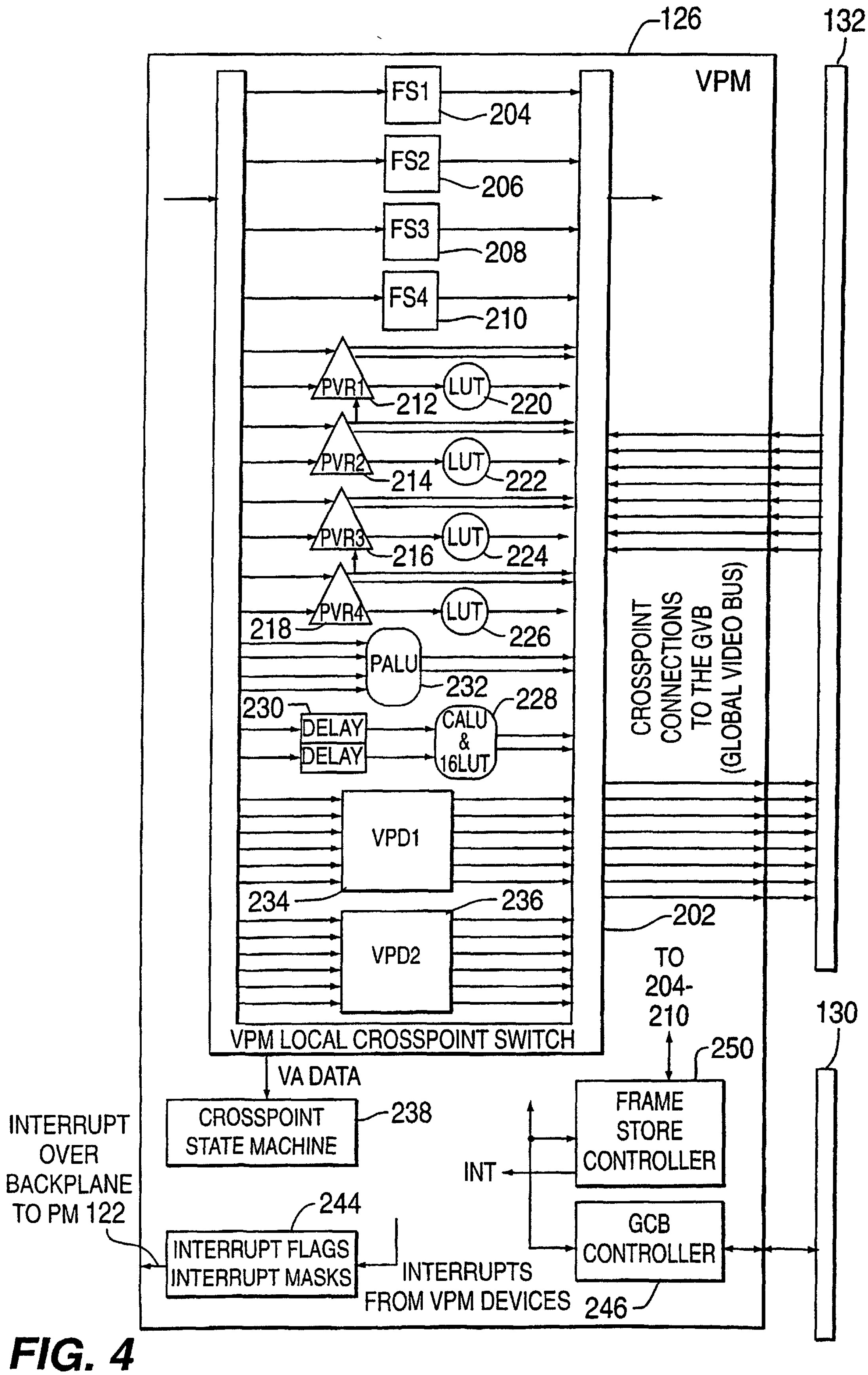
126
132
VPM
FS1
204
FS2
206
FS3
208
FS4
210
PVR1
212
LUT
220
PVR2
214
LUT
222
PVR3
216
LUT
224
PVR4
218
LUT
226
PALU
232
230
DELAY
DELAY
CALU & 16LUT
228
CROSSPOINT CONNECTIONS TO THE GVB (GLOBAL VIDEO BUS)
VPD1
234
236
VPD2
202
TO 204-210
130
VPM LOCAL CROSSPOINT SWITCH
250
VA DATA
CROSSPOINT STATE MACHINE
238
FRAME STORE CONTROLLER
INTERRUPT OVER BACKPLANE TO PM 122
INT
244
GCB CONTROLLER
INTERRUPT FLAGS
INTERRUPT MASKS
INTERRUPTS FROM VPM DEVICES
246

FIG. 4

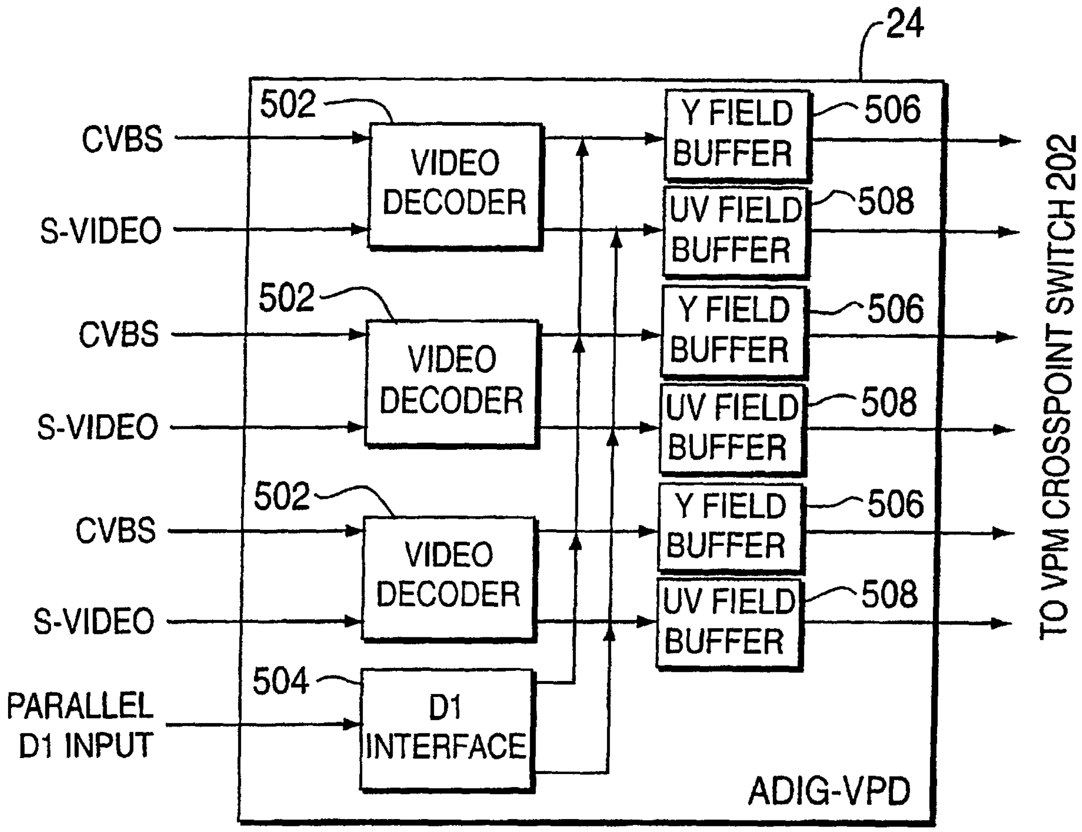
24
502
502
502
504
CVBS
S-VIDEO
CVBS
S-VIDEO
CVBS
S-VIDEO
PARALLEL D1 INPUT
VIDEO DECODER
VIDEO DECODER
VIDEO DECODER
D1 INTERFACE
Y FIELD BUFFER
UV FIELD BUFFER
Y FIELD BUFFER
UV FIELD BUFFER
Y FIELD BUFFER
UV FIELD BUFFER
506
508
506
508
506
508
ADIG-VPD
TO VPM CROSSPOINT SWITCH 202

*FIG. 5*

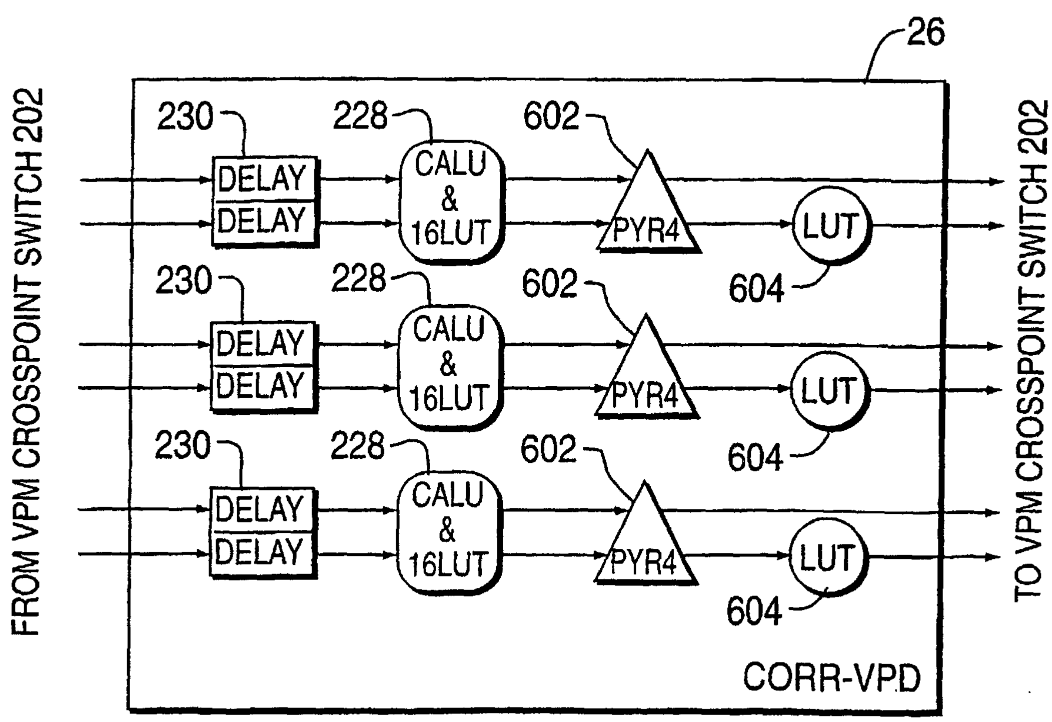
26
FROM VPM CROSSPOINT SWITCH 202
230
228
602
DELAY
DELAY
CALU & 16LUT
PYR4
LUT
604
230
228
602
DELAY
DELAY
CALU & 16LUT
PYR4
LUT
604
230
228
602
DELAY
DELAY
CALU & 16LUT
PYR4
LUT
604
CORR-VPD
TO VPM CROSSPOINT SWITCH 202

*FIG. 6*

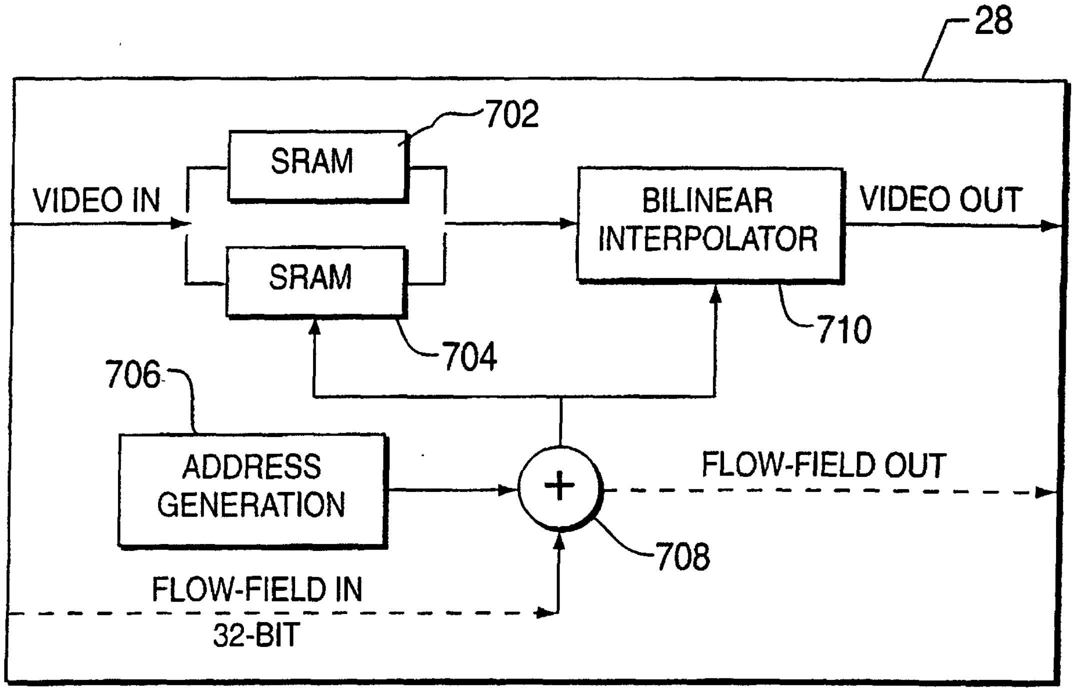
28
702
SRAM
VIDEO IN
BILINEAR
INTERPOLATOR
VIDEO OUT
SRAM
710
704
706
ADDRESS
GENERATION
FLOW-FIELD OUT
708
FLOW-FIELD IN
32-BIT

*FIG. 7*

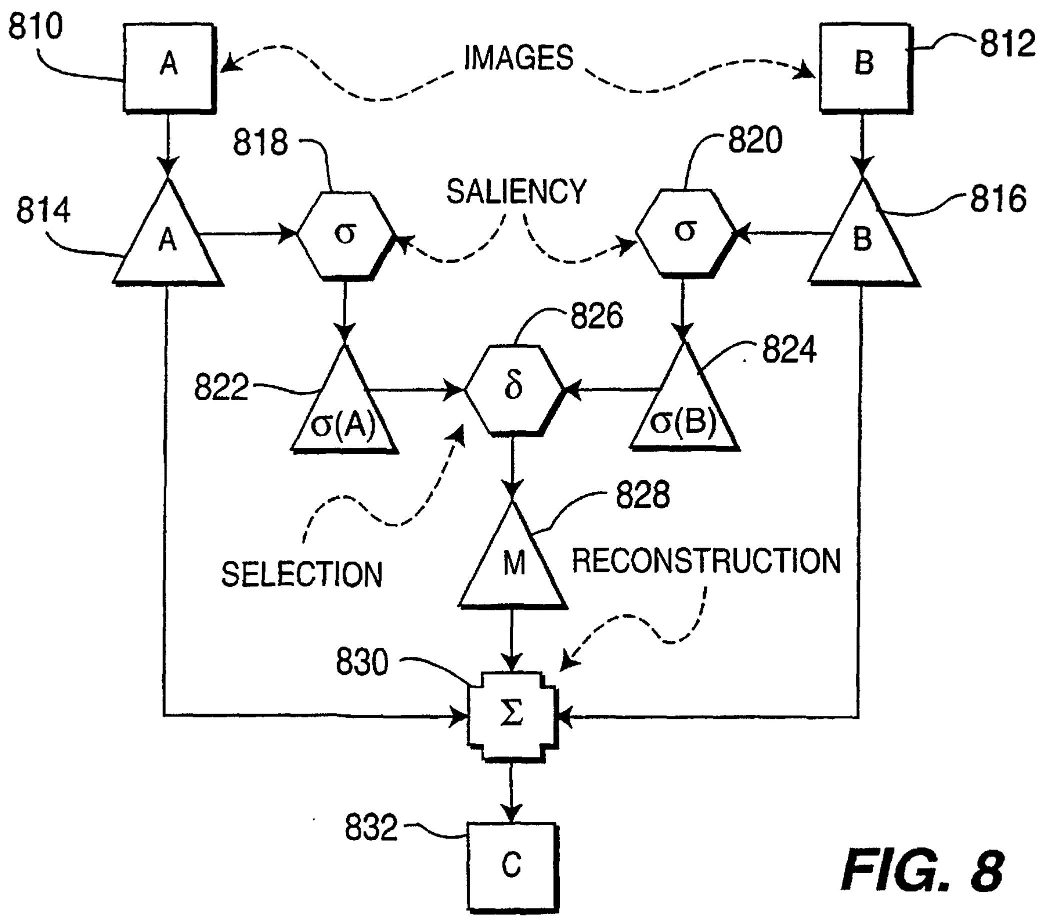
810
A
IMAGES
B
812
818
820
SALIENCY
814
A
σ
σ
B
816
826
824
822
δ
σ(A)
σ(B)
828
SELECTION
M
RECONSTRUCTION
830
Σ
832
C

*FIG. 8*

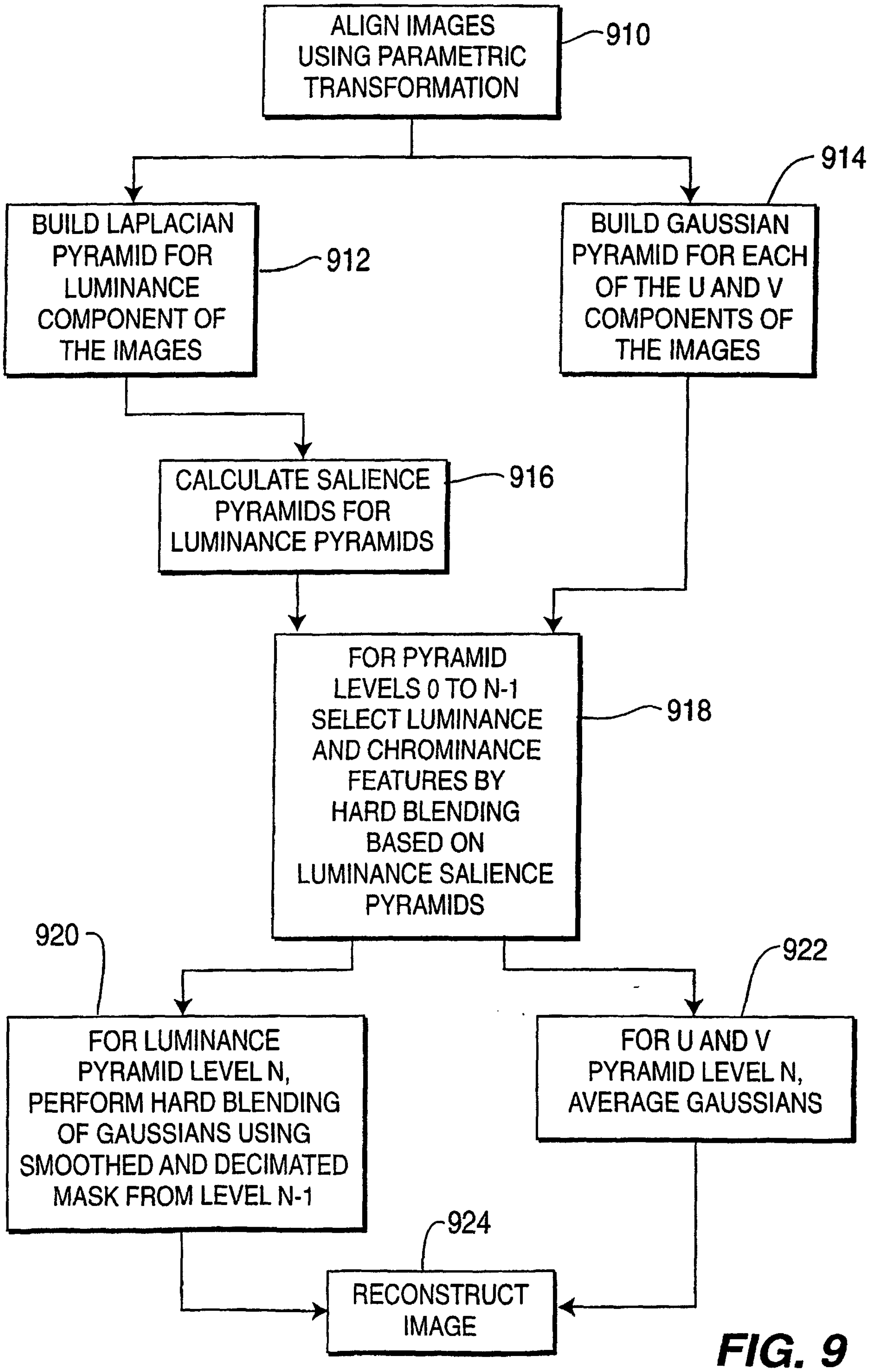
ALIGN IMAGES USING PARAMETRIC TRANSFORMATION
910
BUILD LAPLACIAN PYRAMID FOR LUMINANCE COMPONENT OF THE IMAGES
912
BUILD GAUSSIAN PYRAMID FOR EACH OF THE U AND V COMPONENTS OF THE IMAGES
914
CALCULATE SALIENCE PYRAMIDS FOR LUMINANCE PYRAMIDS
916
FOR PYRAMID LEVELS 0 TO N-1 SELECT LUMINANCE AND CHROMINANCE FEATURES BY HARD BLENDING BASED ON LUMINANCE SALIENCE PYRAMIDS
918
920
FOR LUMINANCE PYRAMID LEVEL N, PERFORM HARD BLENDING OF GAUSSIANS USING SMOOTHED AND DECIMATED MASK FROM LEVEL N-1
922
FOR U AND V PYRAMID LEVEL N, AVERAGE GAUSSIANS
924
RECONSTRUCT IMAGE

*FIG. 9*

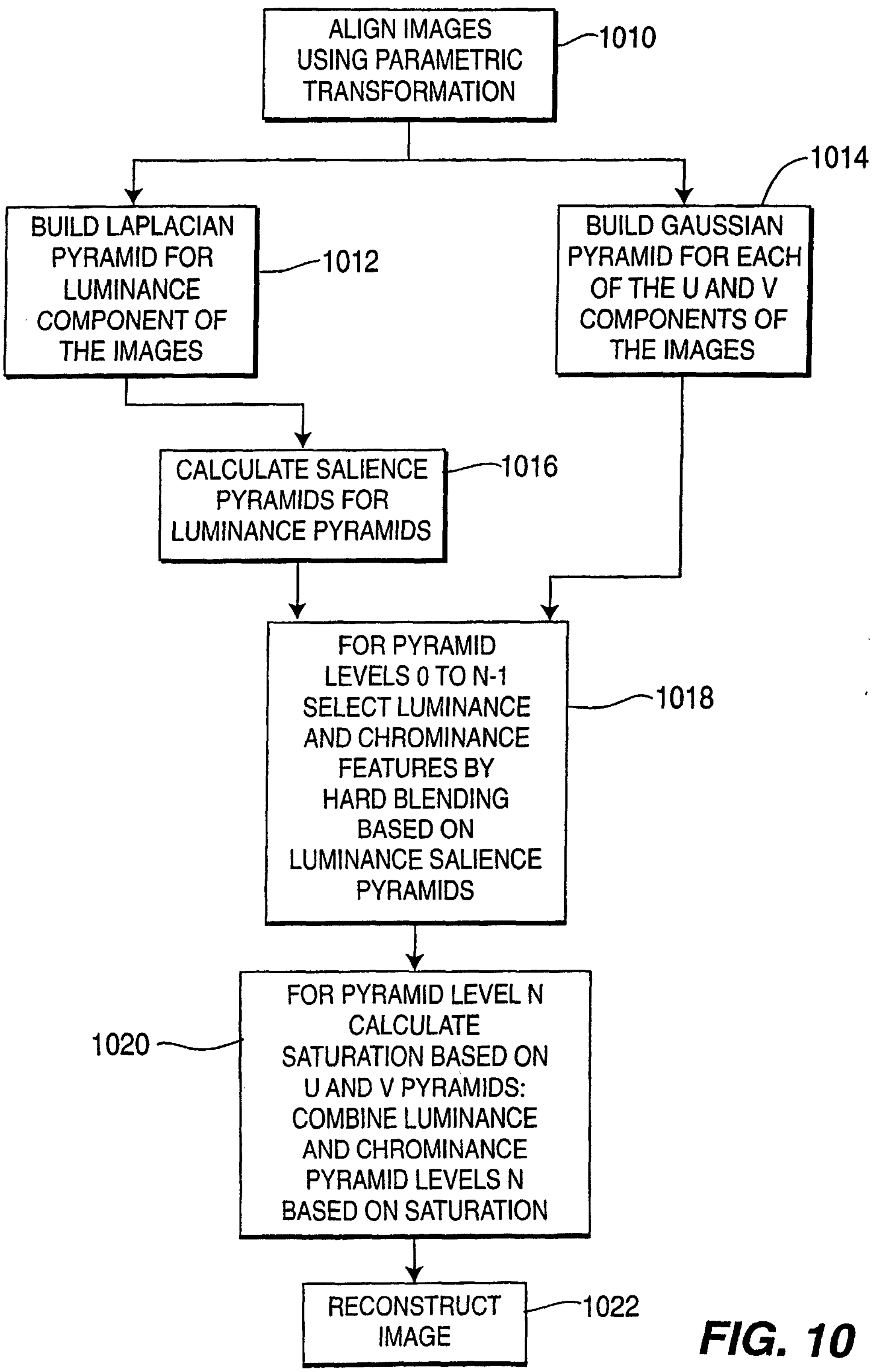
ALIGN IMAGES USING PARAMETRIC TRANSFORMATION
1010
BUILD LAPLACIAN PYRAMID FOR LUMINANCE COMPONENT OF THE IMAGES
1012
BUILD GAUSSIAN PYRAMID FOR EACH OF THE U AND V COMPONENTS OF THE IMAGES
1014
CALCULATE SALIENCE PYRAMIDS FOR LUMINANCE PYRAMIDS
1016
FOR PYRAMID LEVELS 0 TO N-1 SELECT LUMINANCE AND CHROMINANCE FEATURES BY HARD BLENDING BASED ON LUMINANCE SALIENCE PYRAMIDS
1018
FOR PYRAMID LEVEL N CALCULATE SATURATION BASED ON U AND V PYRAMIDS: COMBINE LUMINANCE AND CHROMINANCE PYRAMID LEVELS N BASED ON SATURATION
1020
RECONSTRUCT IMAGE
1022

*FIG. 10*

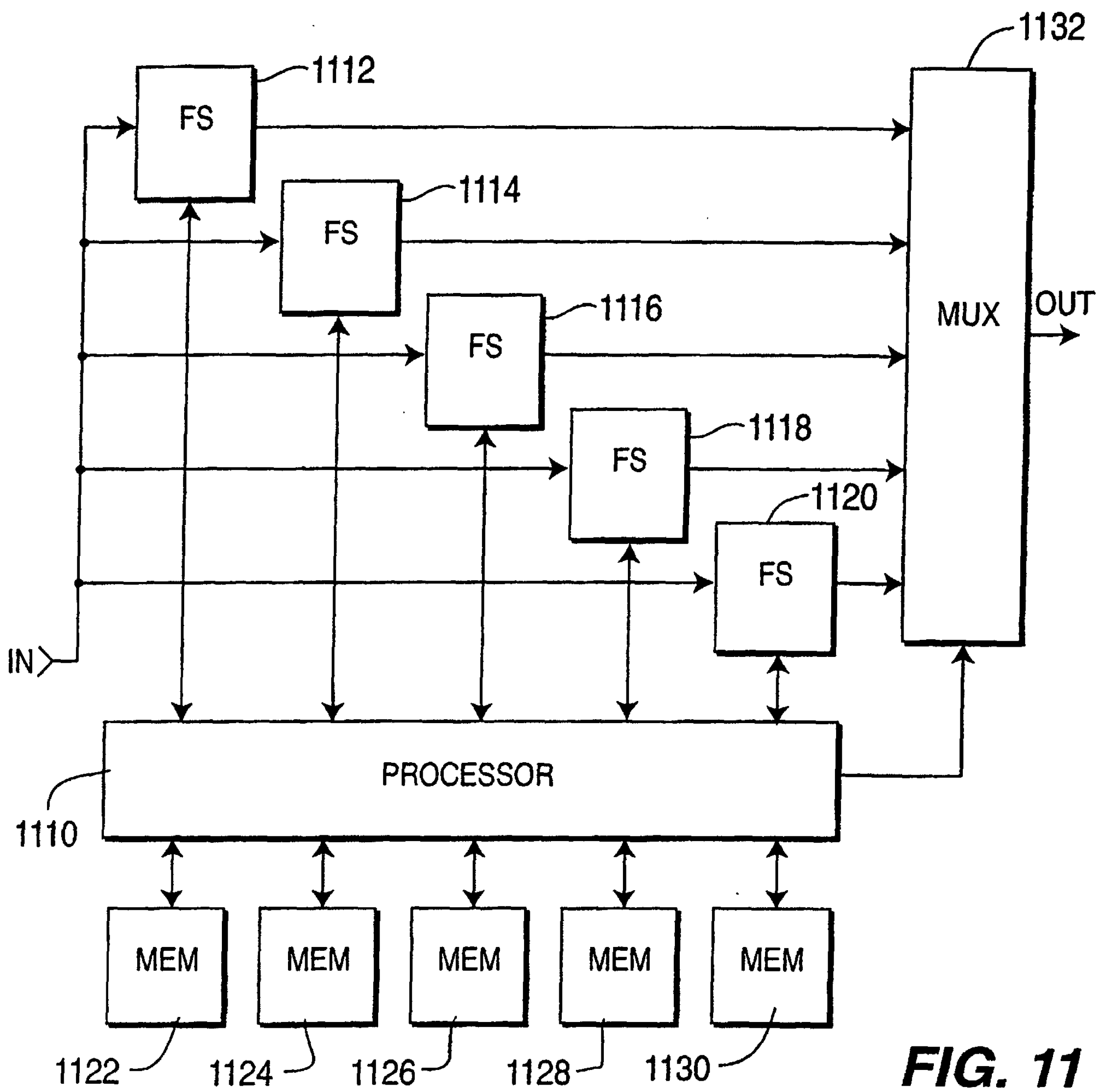
1132
1112
FS
1114
FS
1116
FS
1118
FS
1120
FS
MUX
OUT
IN
PROCESSOR
1110
MEM
MEM
MEM
MEM
MEM
1122
1124
1126
1128
1130

FIG. 11

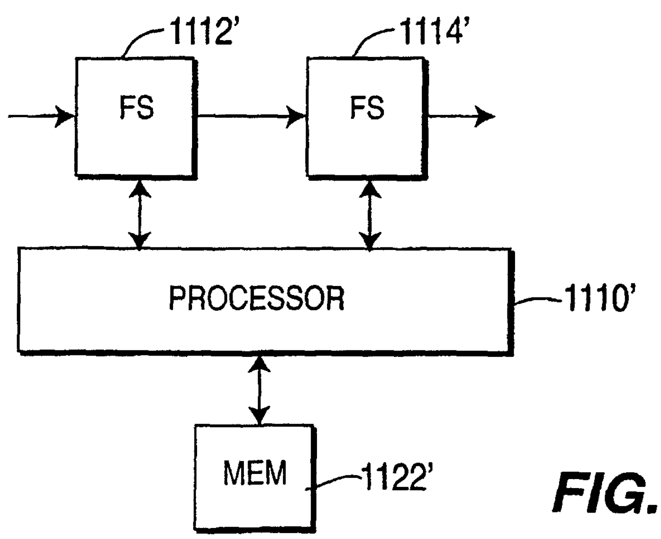
1112'
1114'
FS
FS
PROCESSOR
1110'
MEM
1122'

FIG. 12

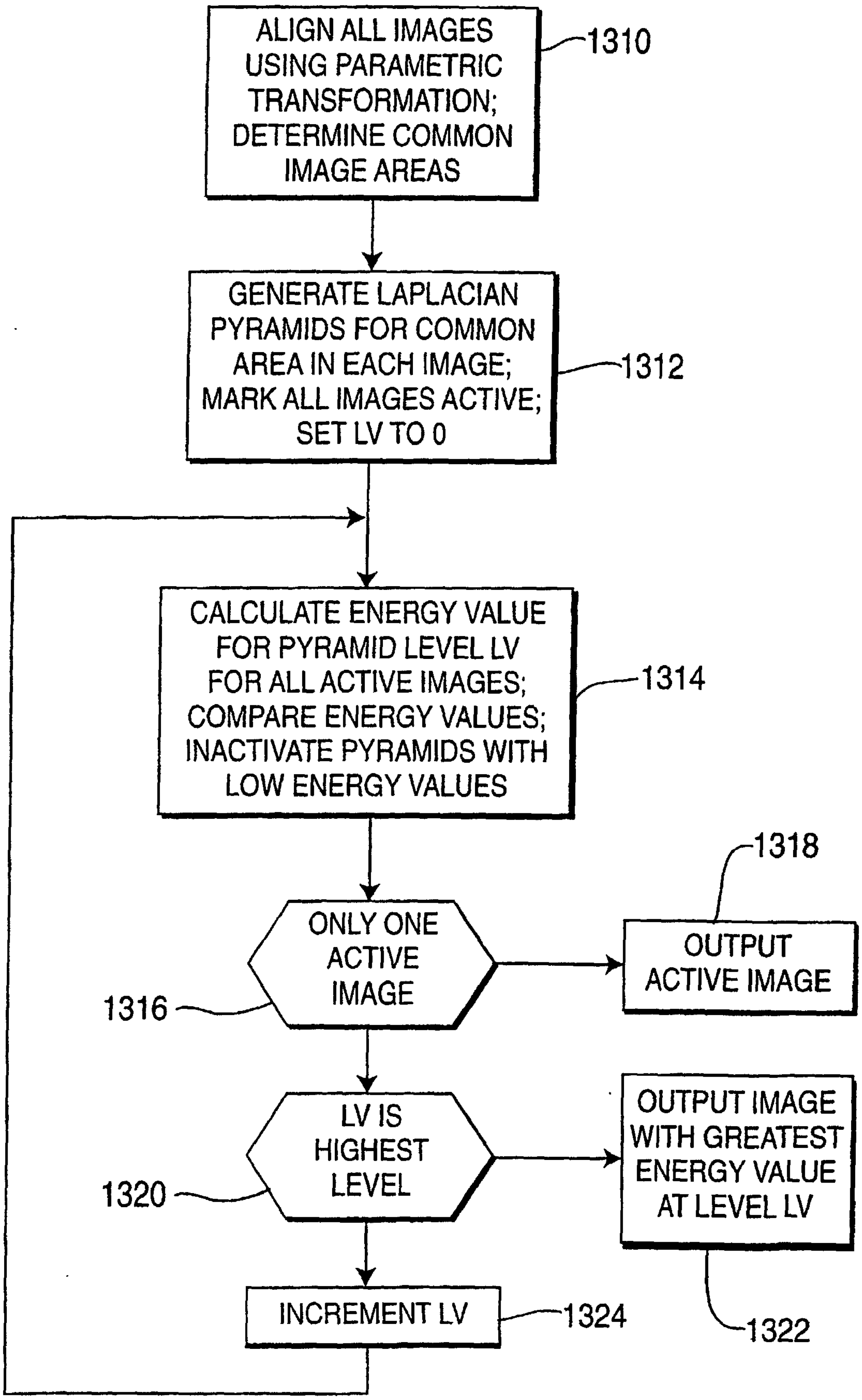
ALIGN ALL IMAGES USING PARAMETRIC TRANSFORMATION; DETERMINE COMMON IMAGE AREAS
1310
GENERATE LAPLACIAN PYRAMIDS FOR COMMON AREA IN EACH IMAGE; MARK ALL IMAGES ACTIVE; SET LV TO 0
1312
CALCULATE ENERGY VALUE FOR PYRAMID LEVEL LV FOR ALL ACTIVE IMAGES; COMPARE ENERGY VALUES; INACTIVATE PYRAMIDS WITH LOW ENERGY VALUES
1314
1318
ONLY ONE ACTIVE IMAGE
OUTPUT ACTIVE IMAGE
1316
LV IS HIGHEST LEVEL
OUTPUT IMAGE WITH GREATEST ENERGY VALUE AT LEVEL LV
1320
INCREMENT LV
1324
1322

FIG. 13

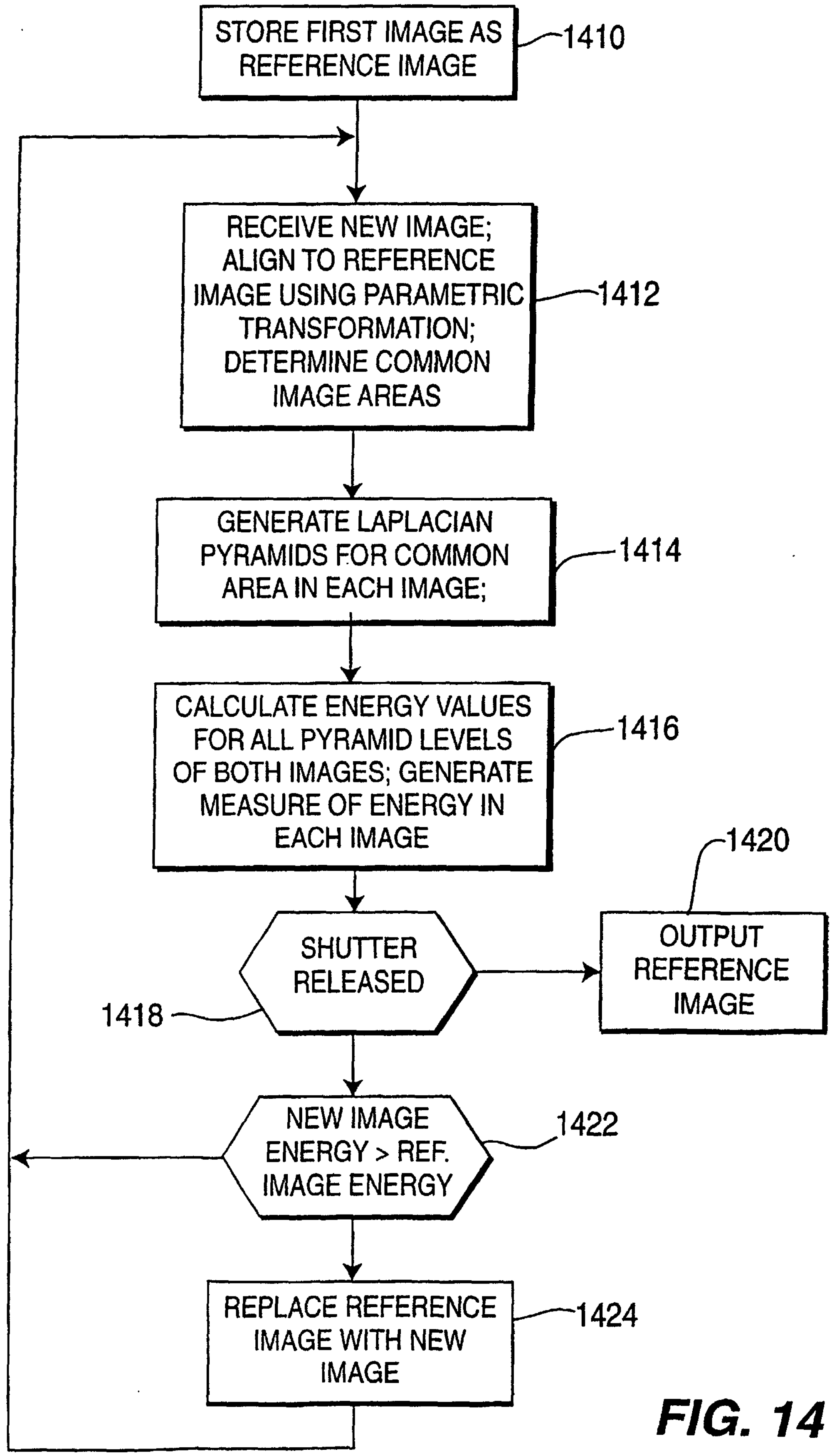
STORE FIRST IMAGE AS REFERENCE IMAGE
1410
RECEIVE NEW IMAGE; ALIGN TO REFERENCE IMAGE USING PARAMETRIC TRANSFORMATION; DETERMINE COMMON IMAGE AREAS
1412
GENERATE LAPLACIAN PYRAMIDS FOR COMMON AREA IN EACH IMAGE;
1414
CALCULATE ENERGY VALUES FOR ALL PYRAMID LEVELS OF BOTH IMAGES; GENERATE MEASURE OF ENERGY IN EACH IMAGE
1416
1420
SHUTTER RELEASED
OUTPUT REFERENCE IMAGE
1418
NEW IMAGE ENERGY > REF. IMAGE ENERGY
1422
REPLACE REFERENCE IMAGE WITH NEW IMAGE
1424

FIG. 14

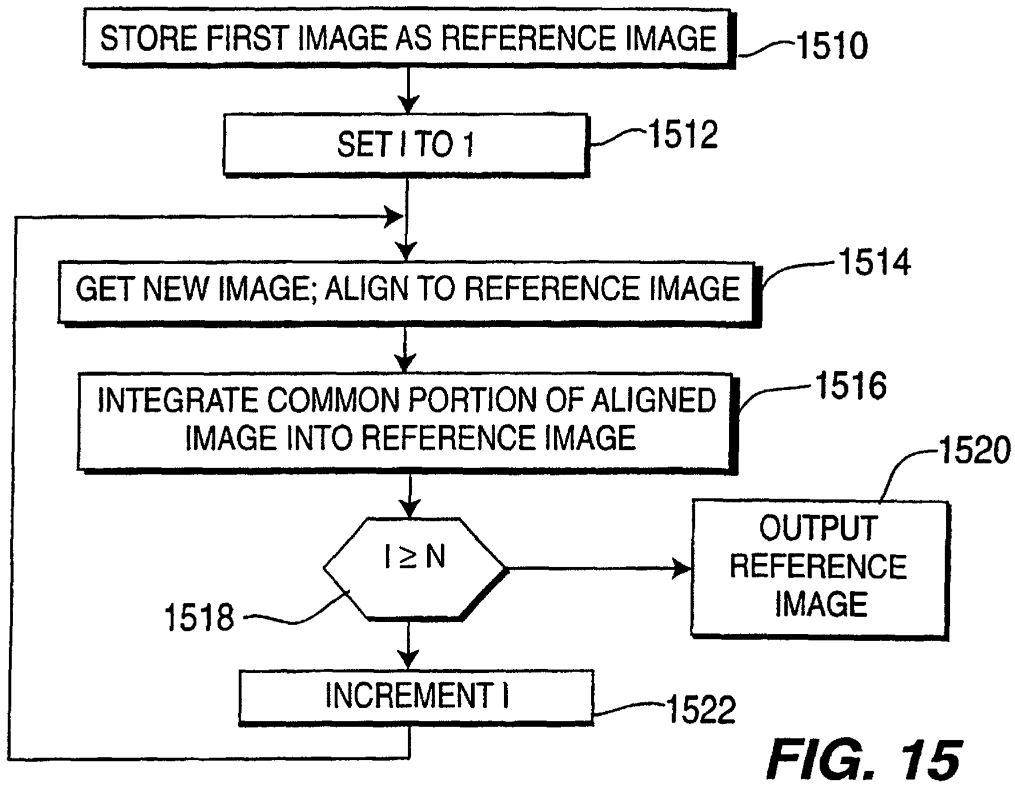
STORE FIRST IMAGE AS REFERENCE IMAGE
1510
SET I TO 1
1512
GET NEW IMAGE; ALIGN TO REFERENCE IMAGE
1514
INTEGRATE COMMON PORTION OF ALIGNED IMAGE INTO REFERENCE IMAGE
1516
1520
I ≥ N
OUTPUT REFERENCE IMAGE
1518
INCREMENT I
1522

FIG. 15

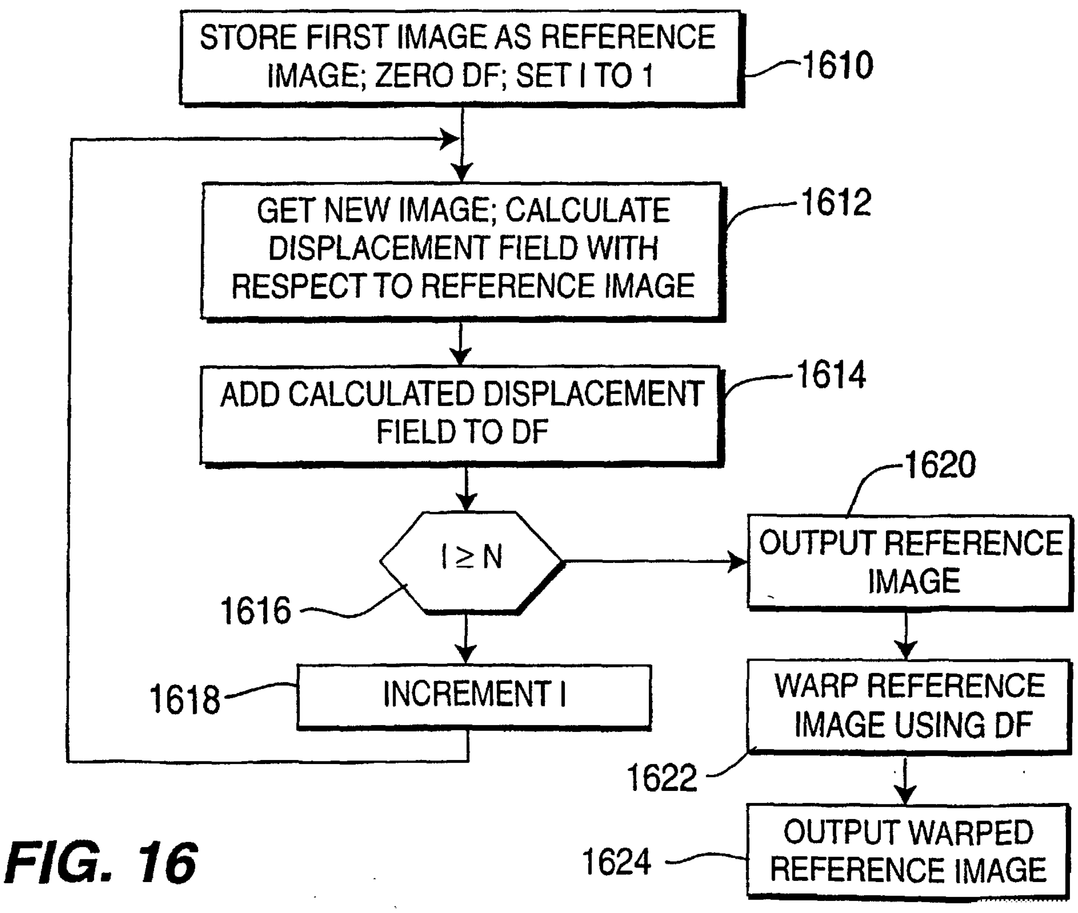
STORE FIRST IMAGE AS REFERENCE IMAGE; ZERO DF; SET I TO 1
1610
GET NEW IMAGE; CALCULATE DISPLACEMENT FIELD WITH RESPECT TO REFERENCE IMAGE
1612
ADD CALCULATED DISPLACEMENT FIELD TO DF
1614
1620
I ≥ N
OUTPUT REFERENCE IMAGE
1616
1618
INCREMENT I
WARP REFERENCE IMAGE USING DF
1622
1624
OUTPUT WARPED REFERENCE IMAGE

FIG. 16

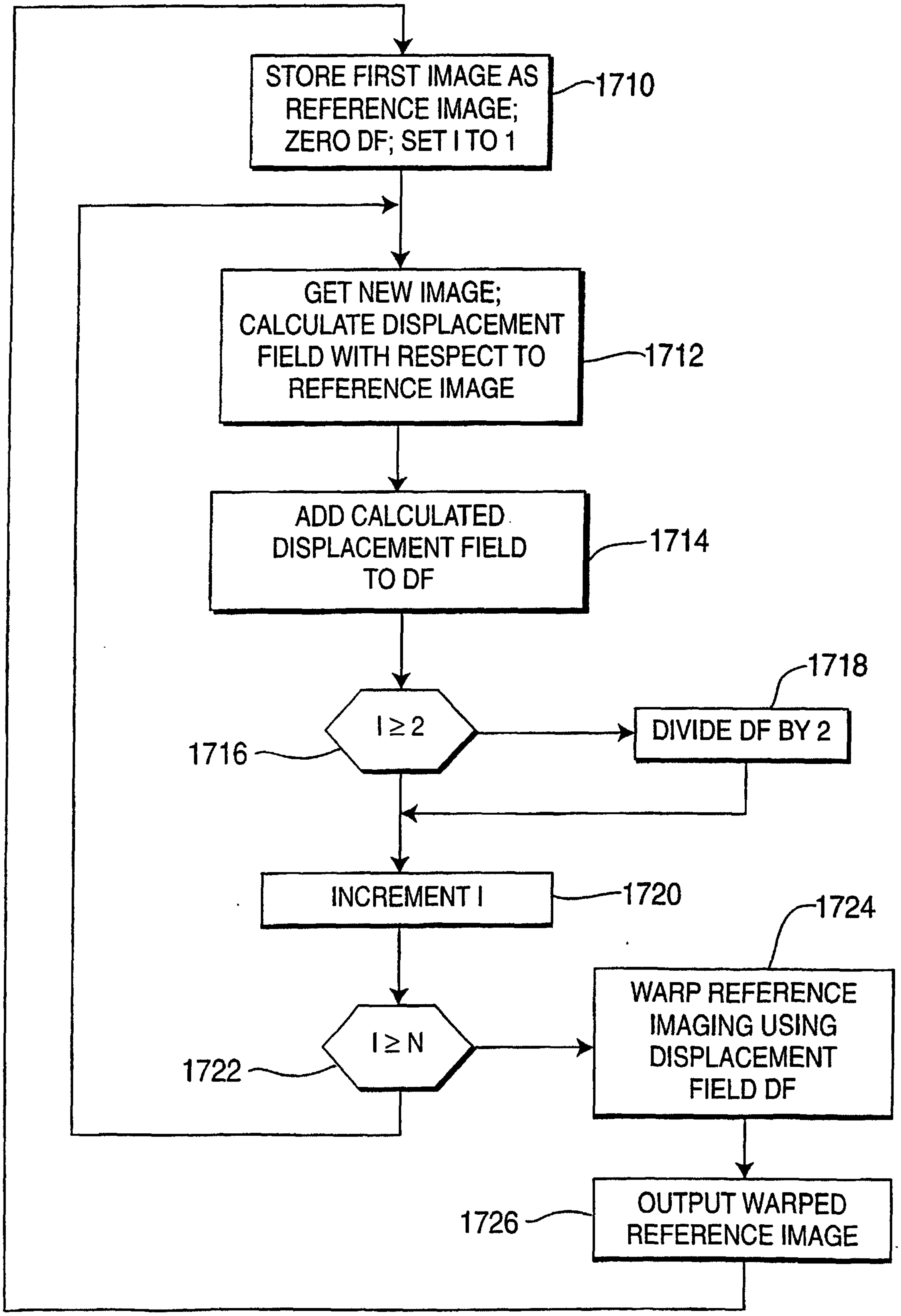
STORE FIRST IMAGE AS REFERENCE IMAGE; ZERO DF; SET I TO 1
1710
GET NEW IMAGE; CALCULATE DISPLACEMENT FIELD WITH RESPECT TO REFERENCE IMAGE
1712
ADD CALCULATED DISPLACEMENT FIELD TO DF
1714
I ≥ 2
1716
DIVIDE DF BY 2
1718
INCREMENT I
1720
I ≥ N
1722
WARP REFERENCE IMAGING USING DISPLACEMENT FIELD DF
1724
OUTPUT WARPED REFERENCE IMAGE
1726

*FIG. 17*

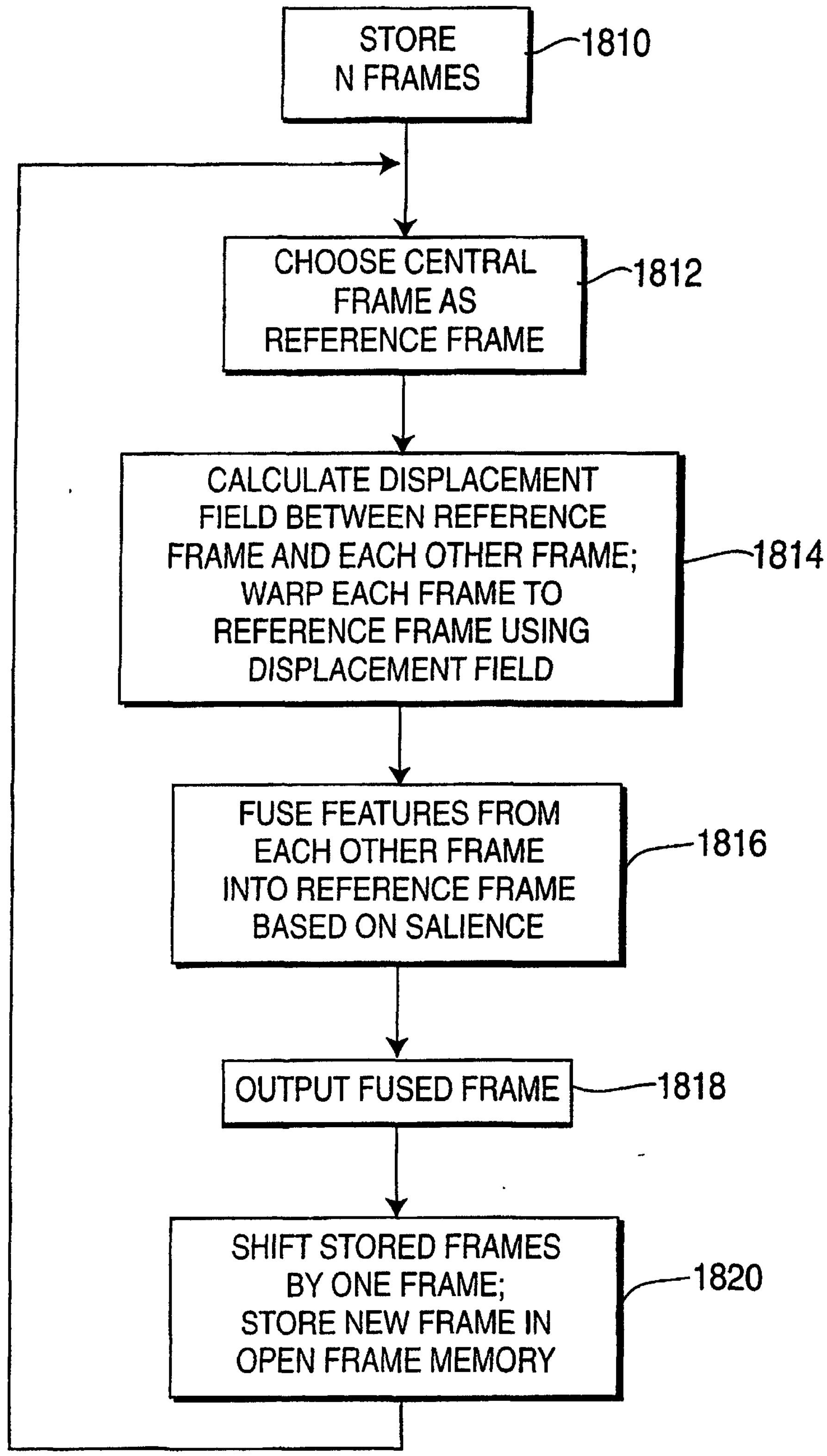
STORE
N FRAMES
1810
CHOOSE CENTRAL
FRAME AS
REFERENCE FRAME
1812
CALCULATE DISPLACEMENT
FIELD BETWEEN REFERENCE
FRAME AND EACH OTHER FRAME;
WARP EACH FRAME TO
REFERENCE FRAME USING
DISPLACEMENT FIELD
1814
FUSE FEATURES FROM
EACH OTHER FRAME
INTO REFERENCE FRAME
BASED ON SALIENCE
1816
OUTPUT FUSED FRAME
1818
SHIFT STORED FRAMES
BY ONE FRAME;
STORE NEW FRAME IN
OPEN FRAME MEMORY
1820

*FIG. 18*

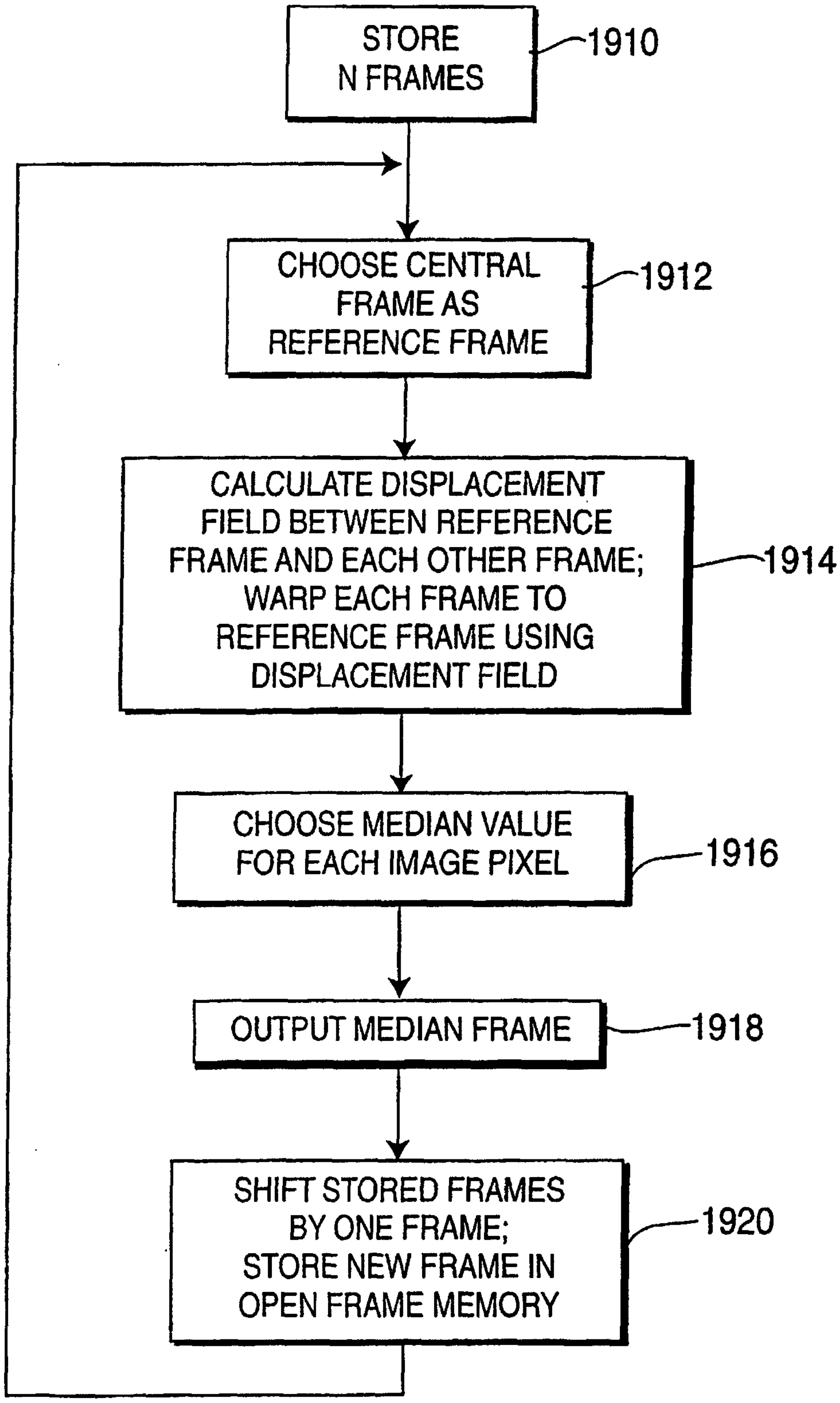
STORE
N FRAMES
1910
CHOOSE CENTRAL
FRAME AS
REFERENCE FRAME
1912
CALCULATE DISPLACEMENT
FIELD BETWEEN REFERENCE
FRAME AND EACH OTHER FRAME;
WARP EACH FRAME TO
REFERENCE FRAME USING
DISPLACEMENT FIELD
1914
CHOOSE MEDIAN VALUE
FOR EACH IMAGE PIXEL
1916
OUTPUT MEDIAN FRAME
1918
SHIFT STORED FRAMES
BY ONE FRAME;
STORE NEW FRAME IN
OPEN FRAME MEMORY
1920

*FIG. 19*

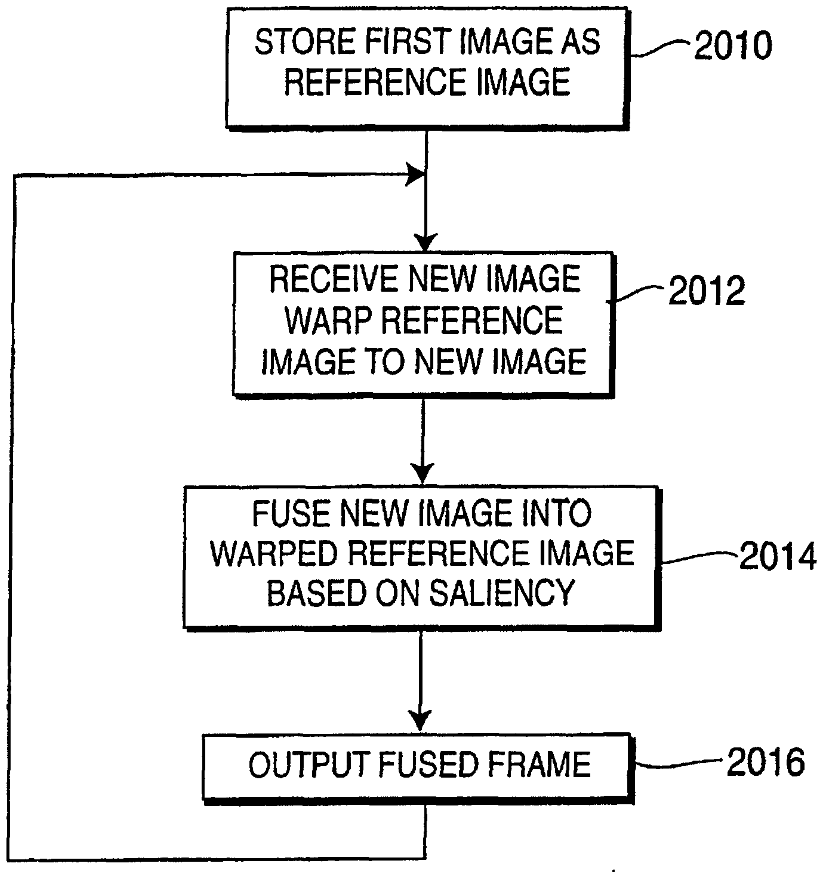
STORE FIRST IMAGE AS REFERENCE IMAGE
2010
RECEIVE NEW IMAGE WARP REFERENCE IMAGE TO NEW IMAGE
2012
FUSE NEW IMAGE INTO WARPED REFERENCE IMAGE BASED ON SALIENCY
2014
OUTPUT FUSED FRAME
2016

FIG. 20

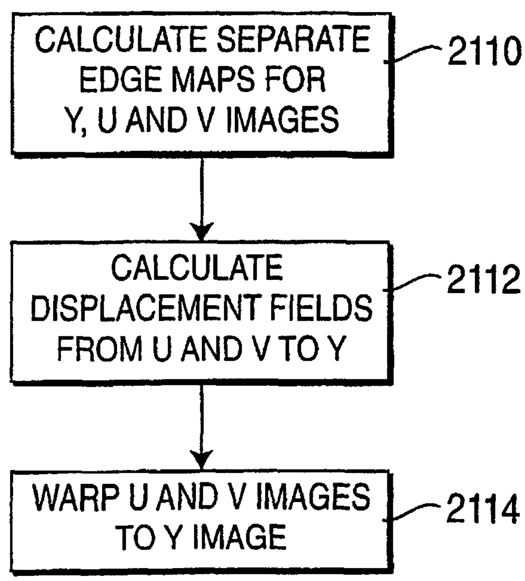
CALCULATE SEPARATE EDGE MAPS FOR Y, U AND V IMAGES
2110
CALCULATE DISPLACEMENT FIELDS FROM U AND V TO Y
2112
WARP U AND V IMAGES TO Y IMAGE
2114

FIG. 21